# EUROPÄISCHE PATENTANMELDUNG

(11) **EP 4 841 612 A1**
(43) Veröffentlichungstag der Anmeldung: **18.11.2026**
(21) Anmeldenummer: 25176576.4
(22) Anmeldetag: 15.05.2025
(51) Int. Cl.: G09C 1/00, H04L 9/08, H04L 9/32

(54) **VERFAHREN UND SYSTEM ZUR ERZEUGUNG KRYPTOGRAPHISCHER SCHLÜSSEL AUF BASIS EINER MULTIMODALEN MEMS-PUF**

(71) Anmelder: Hahn-Schickard-Gesellschaft für angewandte Forschung e. V., 70569 Stuttgart (DE)
(72) Erfinder: Zimmermann, Lukas, 70569 Stuttgart (DE); Dienger, Helena, 70569 Stuttgart (DE); Dienger, Matthias, 70569 Stuttgart (DE); Sikora, Axel, 70569 Stuttgart (DE)
(74) Vertreter: Hertin und Partner Rechts- und Patentanwälte PartG mbB

(57) **Zusammenfassung**

Die Erfindung betrifft in einem ersten Aspekt ein Verfahren zur Erzeugung eines kryptographischen Schlüssels und/oder zur Authentifizierung/Identifizierung eines Objekts auf Basis einer physisch unklonierbaren Funktion (PUF), umfassend die Bereitstellung eines MEMS-Bauteils, wobei das MEMS-Bauteil als PUF dient, sowie die Anregung des MEMS-Bauteils mittels eines Anregungssignales, wobei das Anregungssignal eine Eigenfrequenz mindestens einer PUF-Mode umfasst, welche sich von einer Anwendungsfrequenz zur Anregung des MEMS-Bauteils in dessen Anwendung unterscheidet. Das Verfahren umfasst ferner die Erfassung eines Messsignales des MEMS-Bauteils, wobei das Messsignal die mindestens eine PUF-Mode umfasst, sowie die Erzeugung des kryptographischen Schlüssels und/oder Identifizierung des Objekts unter Berücksichtigung des Messsignals der mindestens einen PUF-Mode.

In einem weiteren Aspekt betrifft die Erfindung ein entsprechendes System zur Erzeugung eines kryptografischen Schlüssels und/oder zur Identifizierung von Objekten auf Basis einer PUF, sowie die Verwendung eines solchen Systems zur Erzeugung eines kryptografischen Schlüssels und/oder zur Identifizierung von Objekten.

## Beschreibung

Die Erfindung betrifft in einem ersten Aspekt ein Verfahren zur Erzeugung eines kryptographischen Schlüssels und/oder zur Authentifizierung/Identifizierung eines Objekts auf Basis einer physisch unklonierbaren Funktion (PUF), umfassend die Bereitstellung eines MEMS-Bauteils, wobei das MEMS-Bauteil als PUF dient, sowie die Anregung des MEMS-Bauteils mittels eines Anregungssignales, wobei das Anregungssignal eine Eigenfrequenz mindestens einer PUF-Mode umfasst, welche sich von einer Anwendungsfrequenz zur Anregung des MEMS-Bauteils in dessen Anwendung unterscheidet. Das Verfahren umfasst ferner die Erfassung eines Messsignales des MEMS-Bauteils, wobei das Messsignal die mindestens eine PUF-Mode umfasst, sowie die Erzeugung des kryptographischen Schlüssels und/oder Identifizierung des Objekts unter Berücksichtigung des Messsignals der mindestens einen PUF-Mode.

In einem weiteren Aspekt betrifft die Erfindung ein entsprechendes System zur Erzeugung eines kryptografischen Schlüssels und/oder zur Identifizierung von Objekten auf Basis einer PUF, sowie die Verwendung eines solchen Systems zur Erzeugung eines kryptografischen Schlüssels und/oder zur Identifizierung von Objekten.

### Hintergrund und Stand der Technik

Eine der größten Herausforderungen im Internet of Things (IoT) ist die Sicherheit. Das loT bezeichnet ein Netzwerk von physischen Geräten, Fahrzeugen, Haushaltsgeräten und anderen Objekten, die über das Internet miteinander verbunden sind und Daten austauschen können. Diese Geräte sind mit Sensoren, Software und anderen Technologien ausgestattet, die es ihnen ermöglichen, Informationen zu sammeln und miteinander zu kommunizieren, um Prozesse zu automatisieren oder zu optimieren.

Insbesondere sehen sich branchenübergreifend Hersteller aus Deutschland und Europa zunehmen von Produktpiraterie, also Kopien von Originalprodukten, bedroht. Beispielsweise waren im Jahr 2020 laut dem Verband Deutscher Maschinen- und Anlagenbau (VDMA) in Deutschland circa 74 % der Unternehmen im Maschinen- und Anlagenbau von Produkt- und Markenpiraterie betroffen (Geerenstein, 2020). Dabei ist die äußerliche Verschleierung von Plagiaten in vielen Fällen qualitativ so hochwertig ausgeführt, dass selbst der originäre Hersteller große Aufwände investieren muss, um zwischen Original und Kopie zu unterscheiden. Dies ist zum Beispiel insbesondere bei der Assemblierung von integrierten Schaltkreisen (ICs) auf Leiterplatten (PCBs) relevant. Beispielsweise können Fehlfunktionen von Plagiaten zu einem erheblichen Reputationsverlust des Herstellers eines Originalproduktes führen sowie eine potenzielle Gefahr für die Sicherheit oder Funktionstüchtigkeit gefälschter Produkte darstellen. Dies kann insbesondere für Anwendungsgebiete mit Safety-Anforderungen von hoher Relevanz sein, bei den beispielsweise Sensoren zum Erfassen von potenziellen Gefahren oder Aktoren zum Auslösen von Sicherheitsmaßnahmen zum Einsatz kommen.

Laut der aktuellen VDMA-Studie "Industrial Security und Produktpiraterie" aus dem Jahr 2024, gab jedes zweite der befragten (deutschen) Unternehmen an, von Produkt- und/oder Markenpiraterie betroffen zu sein (Becker, 2024). Seit dem Jahr 2006 konnte erstmals die Schwelle von 60 % unterschritten werden, was verdeutlicht, dass sich die auf unternehmerischer und politischer Ebene unternommenen Anstrengungen und Aktivitäten gegen Produkt- und Markenpiraterie erstmals bemerkbar machen. Gleichermaßen wird jedoch betont, dass die Schutzmaßnahmen keinesfalls nachlassen dürfen, sondern an die neu vorherrschenden Gegebenheiten angepasst werden müssen, indem zunehmend professionelle Plagiatoren (Gesamtanteil von 42 %, davon 82 % aus China) auftreten und diese vor allem größere Unternehmen als Angriffsziele anvisieren. Mit einem Anteil von 58 %, finden sich bei den plagiierten Produkten Komponenten - darunter u.a. auch elektronische Bauteile - als Spitzenreiter wieder. Des Weiteren werden in der Studie die größten von Plagiaten ausgehenden Gefahren benannt. In 40 % der Fälle entsteht durch die Verwendung eines Plagiats eine direkte Personengefährdung, ausgelöst durch Fehlfunktion oder der Nichteinhaltung von Qualitätsstandards. Darüber werden u.a. auch Gefahren für das eigene Unternehmen, bspw. durch Rufschädigung aufgrund reduzierter Zuverlässigkeit, geringerer Qualität, Wettbewerbsnachteilen sowie daraus resultierenden wirtschaftlichen Einbußen genannt. Bis zum Jahr 2023 haben nur 56 % der deutschen Unternehmen technische Maßnahmen gegen Produktpiraterie unternommen.

Bisherige speicherbasierte Sicherheitslösungen, wie beispielsweise Trusted Platform Modules (TPMs), erzeugen und verwalten kryptografischen Schlüsseln. Jedoch können diese nachweislich durch Sicherheitslücken oder Angriffe überwunden werden. Darüber hinaus sind solche Sicherheitslösungen häufig kostenaufwändig, selbst wenn sie in sehr großen Mengen produziert werden. Zum Beispiel kostet ein TPM, das häufig in Computern und anderen Geräten zur sicheren Datenverschlüsselung und Authentifizierung eingesetzt wird, zwischen 0,50 und 1,00 € pro Stück, was für große Produktionsmengen die Wirtschaftlichkeit dieser Lösung infrage stellt. Außerdem ist zur sicheren digitalen Speicherung von Schlüsseln unter Verwendung von nichtflüchtigem Speicher (NVM), wie es bei TPMs der Fall ist, oft eine kontinuierliche Stromversorgung erforderlich, um den Speicher manipulationssicher zu halten.

Eine vielversprechende Alternative stellen physisch unklonierbare Funktionen (engl. *physical unclonable function,* PUFs) dar. Eine PUF ist im Allgemeinen ein physisches Bauteil, welches eine Anforderung (*challenge*) mittels einer Abbildungsvorschrift auf eine Antwort (*response*) abbildet, wobei die Abbildungsvorschrift auf den physikalischen Charakteristiken des Bauteils basiert. Eine PUF wertet üblicherweise Fertigungsschwankungen des Bauteils aus und erzeugt daraus eine individuelle Antwort. Diese individuelle Antwort variiert zwischen unterschiedlichen Bauteilen und kann daher genutzt werden, um ein Bauteil zu identifizieren und/oder um (kryptografische) Schlüssel zu erzeugen. Mittels einer PUF können kryptographische Schlüssel zur Verschlüsselung von Daten oder zum sicheren Austausch von Daten bzw. zur sicheren Kommunikation zwischen unterschiedlichen Recheneinheiten erzeugt werden. Insbesondere ist ein Vorteil eines aus einer PUF generierten Schlüssels, dass dieser nicht gespeichert werden muss, was sicherheitsanfällig ist, sondern bei Bedarf durch Ausführen der PUF generiert werden kann.

Somit ist eine PUF insbesondere durch die Eigenschaft einer physischen Unklonierbarkeit gekennzeichnet und hat als solche Ähnlichkeiten zu biometrischen Merkmalen wie Fingerabdrücken. Die physische Unklonierbarkeit meint vorzugsweise, dass die Herstellung eines physischen Klons einer PUF extrem schwierig oder unmöglich ist. Die ist insbesondere darauf zurückzuführen, dass inhärente Fertigungsschwankungen, welche als Sicherheitsmerkmale dienen, während dem Herstellungsprozess unweigerlich anfallen, jedoch nicht reproduzierbar sind.

Anwendungen für PUFs zur Identifikation und/oder Authentifizierung sind weitreichend und umfassen beispielsweise eine Erhöhung der Fälschungssicherheit von Objekten, eine Implementation in Multi-Faktor-Authentifizierungen, um den Zugang zu einem Computersystem oder Online-Netzwerken ermöglichen sowie eine Unterscheidung von integrierten Schaltkreisen (ICs) bzw. Chips.

Besonders im Hinblick auf die verbreitete Verwendung von mobilen Geräten für alltägliche Aufgaben vom Einkauf bis zu finanziellen Transaktionen haben PUFs ein großes Potential. Dafür werden häufig Passwörter eines Benutzers oder Authentifizierungs-Token für den Benutzer auf dem mobilen Gerät gespeichert. Durch den vielseitigen Einsatz und die vielfältige Nutzung mobiler Geräte in teilweise unsicherer Umgebung, besteht ein erhöhtes Sicherheitsrisiko, dass sich Unberechtigte einen Zugang zu vertraulichen Informationen verschaffen.

PUFs sind in verschiedenen Ausführungen bekannt, wie zum Beispiel als optische PUFs, Delay-PUFs, gedruckte PUFs, analoge PUFs, Memory-PUFs oder MEMS-PUFs.

Optische PUFs können zwar für besonders sichere Authentifizierungssysteme verwandt werden, jedoch ist die technische Implementation aufwändig und kostenintensiv. Außerdem ist das physisch unklonierbare Element, z.B. das lichtstreuende Material, von einer Messeinrichtung bzw. einem digitalen Messprozess getrennt, wodurch insbesondere für eine Authentisierung eines assoziierten Prozessors bzw. integrierten Schaltkreis (IC) ein intrinsisches Risiko bedingt wird.

Ein weiterer bisheriger Ansatz basiert auf der Integration von PUF-Elementen in den IC bzw. in die Prozessorstruktur selbst, beispielsweise mittels konventioneller *complementary metal-oxidesemiconductor* (CMOS) Technologie.

Gassend et al. beschreiben die Integration eines halbleiterbasierten PUF-Elementes in einen konventionellen IC, wofür eine herstellungsbedingte Variabilität von Gate-Verzögerungen als unklonierbare physische Größe genutzt wird, (Gassend, et al., 2002). Einen ähnlichen Ansatz verfolgend schlagen (Lee, et al., 2004) ein PUF-Element als Schiedsrichter-PUF (*engl. arbiterPUF*) vor, wobei im Schaltkreis eine Rennsituation zwischen mindestens zwei digitalen Wegen eingeführt wird. Der Ausgang wird insbesondere durch die Verzögerungsparameter der beteiligten Halbleiterelemente bestimmt, welche herstellungsbedingt zufällig verteilt sind. Eine alternative Variante von halbleiterbasierten PUFs, welche zufällig verteilte Verzögerungen innerhalb der Elemente eines Schaltkreises ausnutzen, sind sogenannte Ringoszillator-PUFs wie u.a. in (Suh & Devadas, 2007). Die Quelle der Zufälligkeit ist auch bei Ringoszillatoren der unkontrollierbare Effekt von Siliziumprozessvariationen auf die Verzögerung der digitalen Komponenten.

Im Stand der Technik ist es weiterhin bekannt MEMS (*microelectromechanical system*) basierte PUFs zu nutzen. MEMS sind sehr kompakt (im Mikrometerbereich) Mikrosysteme die gleichzeitig durch eine hervorragende Funktionalität und immer geringeren Herstellungskosten gekennzeichnet sind.

Bei einer MEMS-PUF wird üblicherweise ein elektrisches Signal, z.B. mit einer bestimmten Spannung und/oder Frequenz als Anregung (Challenge) verwendet. Die Antwort (Response) ist, nach einem möglichen postprocessing-Schritt, üblicherweise eine binäre Zeichenkette. Durch das Postprocessing wir bevorzugterweise aus analogen Merkmalswerten des Messsignals in geeigneter Weise in eine binäre Antwort (Response) erzeugt.

In Willers et al. 2016 wird der Einsatz von MEMS-Sensoren, insbesondere von MEMS-Gyroskopen, zur Erzeugung von kryptografischen Schlüsseln als PUFs beschrieben. Dazu werden die Einzigartigkeit und die inhärente Unklonierbarkeit von MEMS-Strukturen, die durch Fertigungstoleranzen entstehen, genutzt. Die komplexe mechanische Struktur von MEMS-Gyroskopen wird als besonders vorteilhaft für die extrahierbare Schlüssellänge hervorgehoben. Um ein hohes Sicherheitsniveau und eine Schlüssellänge von 128 Bit zu gewährleisten wird der Einsatz von mehreren MEMS-Strukturen in Kombination vorgeschlagen. Willers et al. untersucht ferner die Robustheit der aus den MEMS-Bauteilen abgeleiteten Fingerabdrücken gegenüber Umwelteinfüllen wie Temperaturänderungen und Alterung (Willers, et al., 2016).

In Abdolinezhad, 2024 werden MEMS-basierte PUFs, insbesondere piezoelektrische und piezoresistive Sensoren, zur Generierung von Sicherheitsschlüsseln beschrieben. Die piezoelektrischen PUFs verwenden die Resonanzfrequenz, Admittanz und den Qualitätsfaktor als Messgrößen, während die piezoresistiven PUFs den Widerstand der Piezowiderstände sowie die Offset-Spannung der Wheatstone-Brücke nutzen. Zur Entropiesteigerung der PUFs werden verschiedene Schlüsselgenerierungsansätze untersucht. Eine Parameterquantisierungsmethode (PQM) wird erweitert, um temperaturbedingte Abweichungen zu kompensieren und die Zuverlässigkeit der generierten Schlüssel zu verbessern. Für PUFs mit einer MEMS-Array-Struktur werden gruppenbasierte Methoden zur Schlüsselgenerierung entwickelt, wie PUF Output Positioning (POP), der durch die Einführung von Hilfsdaten eine höhere Entropie ermöglicht. Diese Methoden zur Entropiesteigerung, welche insbesondere dem Ausgleich von natürlichen Variationen und Umwelteinflüssen dienen, erfordern in der Regel umfangreiche Berechnungen und die Verwaltung von Hilfsdaten, um zuverlässige und sichere Schlüssel zu generieren (Abdolinezhad, 2024).

EP3340214A1 beschreibt die Kombination von PUFs, insbesondere von synthetischen PUFs, um eine Maximierung der Entropie, also eine gesteigerte Eindeutigkeit und so eine höhere Sicherheit zu erreichen. Es wird sowohl die Kombination mehrerer synthetischen PUFs als auch die Kombination mit klassischer PUFs, wie MEMS-, Silizium-, Beschichtungs- und optisch-basierte PUFs beschrieben.

US9667419B2 betrifft ein Verfahren zur Bestimmung eines kryptografischen Schlüssels eines MEMS-Bauteils. Es wird ein Merkmalsvektor ("feature vector") umfassend eine Mehrzahl von Werten, die jeweils zu einer physikalischen Eigenschaft des Gerätes gehören, bestimmt und ein erster Schlüssel ("first key") generiert. Zur Adressierung von Rauschen und Variabilität in den physikalischen Eigenschaften wird ein Fuzzy-Extraktor verwendet. Dadurch soll ein sicherer und zuverlässiger kryptografischer Schlüssel generiert werden. Ferner wird die Verwendung von zwei MEMS-Strukturen sowie das Erstellen von jeweils einem Merkmalsvektoren und das Generieren eines Schlüssels basierend auf den zwei Vektoren beschrieben.

In CN115987507A wird ein MEMS-basiertes Verfahren zur Erzeugung eines für elektronische Geräte beschrieben. Dazu wird eine erste Datensequenz des MEMS-Bauteils im Ruhezustand generiert, diese wird vorverarbeitet und in ein vortrainiertes Schlüsselgenerierungsmodell eingegeben, um einen ersten Merkmalsvektor zu erhalten. Anschließend wird dieser Merkmalsvektor in einen Fuzzy-Extractor eingegeben, um einen Schlüssel und Hilfsdaten zu generieren. Ein ähnlicher Prozess wird mit einer zweiten Datensequenz wiederholt, um den endgültigen Schlüssel zu generieren. Die Datensequenzen werden durch Dateninterpolation, Zentralisierung und das Entfernen von Ausreißern vorverarbeitet, um eine genauere und stabilere Schlüsselerzeugung zu gewährleisten. Bevorzugterweise werden Gyroskope verwendet.

DE102017205818 A1 betrifft eine MEMS-basierte PUF, wobei ein steuerbares Stellglied eingesetzt wird, um Abbildungsvorschrift zwischen einer Anforderung (Challenge) und der Antwort (Response) zu verändern, beispielsweise durch Veränderung von Umgebungsparametern (z.B. Temperatur, Druck) mit einem Heiz- oder Kühlelement. So können verschiedene Antworten auf dieselbe Anfrage generiert und so mehrere kryptographische Schlüssel erzeugt werden. Dadurch soll die Wertigkeit der MEMS-basierten PUF erhöht werden.

Nachteilig an den bekannten MEMS-basierten PUFs ist jedoch, dass diese in der Regel auf komplexe Systeme angewiesen sind, die mehrere Komponenten, zusätzliche Verarbeitungsschritte wie einen Fuzzy-Extractor oder vortrainierte Netzwerke erfordern und/oder mehrerer Schlüssel für ein Bauteil benötigen, um die Entropie ausreichend zu erhöhen und somit kryptografische Schlüssel zu erzeugen, die den Sicherheitsanforderungen entsprechen. Die Komplexität führt insbesondere zu kostenintensiven Lösungen, die potenziell anfällig für Kompromittierungen sind.

Im Lichte des Standes der Technik besteht daher mithin ein Bedarf an alternativen oder verbesserten MEMS-basierten PUFs zur Erzeugung eines kryptographischen Schlüssels und/oder zu Identifizierung/Authentifizierung eines Objekts.

### Aufgabe der Erfindung

Aufgabe der Erfindung ist es, ein Verfahren oder System zur Erzeugung eines kryptographischen Schlüssels und/oder zur Identifizierung/Authentifizierung eines Objekts unter Verwendung eines MEMS-Bauteils, welches als physisch unklonierbaren Funktion (PUF) dient, bereitzustellen, welches die Nachteile des Standes der Technik beseitigt.

Insbesondere ist es eine Aufgabe der Erfindung, ein Verfahren oder System zur Erzeugung eines kryptographischen Schlüssels und/oder zur Identifizierung/Authentifizierung eines Objekts unter Verwendung einer PUF basierend auf einem MEMS-Bauteil bereitzustellen, welches sichere kryptografische Schlüssel, beispielsweise zur Identifikation von Produkten oder Prozessoren codieren kann und sich gleichzeitig durch eine einfache, kostengünstige Implementation sowie robustes Ausleseverfahren auszeichnet. Besonders bevorzugt wird hierbei zudem die Umsetzung einer Dual-Use Funktionalität ermöglicht, wobei das MEMS-Bauteil in einer Funktion als Sensor und/oder Aktor eingesetzt werden kann und in einer anderen Funktion als PUF eine Sicherheitsfunktion erfüllt.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung bevorzugt ein Verfahren zur Erzeugung eines kryptographischen Schlüssels und/oder zur Identifizierung/Authentifizierung eines Objekts auf Basis einer physisch unklonierbaren Funktion (PUF) umfassend folgende Schritte:
a) Bereitstellung eines MEMS-Bauteils, wobei das MEMS-Bauteil als PUF dient,
b) Anregung des MEMS-Bauteils mittels eines Anregungssignales, wobei das Anregungssignal eine Eigenfrequenz mindestens einer PUF-Mode umfasst, welche sich von einer Anwendungsfrequenz zur Anregung des MEMS-Bauteil in dessen Anwendung, unterscheidet,
c) Erfassung eines Messsignales des MEMS-Bauteils, wobei das Messsignal die mindestens eine PUF-Mode umfasst,
d) Erzeugung des kryptographischen Schlüssels und/oder Identifizierung/Authentifizierung des Objekts unter Berücksichtigung des Messsignals der mindestens einen PUF-Mode.

Das erfindungsgemäße Verfahren zeichnet sich durch das Erzeugen eines besonders sicheren kryptographischen Schlüssels und/oder eine besonders sichere Identifizierung/Authentifizierung eines Objekts unter Verwendung eines MEMS-Bauteils als physisch unklonierbare Funktion (PUF) aus. Insbesondere zeichnet sich das erfindungsgemäße Verfahren gleichzeitig durch eine einfache und kostengünstige Implementation sowie ein robustes Ausleseverfahren aus. Es wird bevorzugterweise die Erzeugung eines hochsicheren kryptografischen Schlüssels unter Verwendung eines MEMS-Bauteils ermöglicht.

Die Erfinder haben erstmals erkannt, dass die Anregung eines MEMS-Bauteils mittels eines Anregungssignales, welches eine Eigenfrequenz mindestens einer PUF-Mode umfasst, welche sich von einer Anwendungsfrequenz des MEMS-Bauteils unterscheidet, ein überaus hohes, bisher unbekanntes Potential aufweist. In Vorzugsformen kann die Anwendungsfrequenz die Eigenfrequenz einer Anwendungsmode des MEMS-Bauteils sein.

Diese Mode dessen Eigenfrequenz sich von der Anwendungsfrequenz unterscheidet, wird im Sinne der Erfindung bevorzugt als PUF-Mode bezeichnet. Durch das Anregen des MEMS-Bauteils mit einem Messignal umfassend die PUF-Mode und das Erfassen des Messignals umfassend die PUF-Mode wird die Entropie des MEMS-PUFs vorteilhaft wesentlich erhöht. Die Entropie ist in dem Kontext vorzugsweise ein Maß für die Eindeutig- und Einzigartigkeit der MEMS-basierten PUFs. Vorzugsweise dient das MEMS-Bauteil als multimodale MEMS-PUF indem zusätzlich zu einer Anwendungsfrequenz des MEMS-Bauteils eine zusätzliche Mode, die PUF-Mode mit einer von der Anwendungsfrequenz verschiedenen Eigenfrequenz, beachtet und zur Erzeugung der PUF genutzt wird.

Die erfindungsgemäße Lösung ermöglicht so nicht nur eine gesteigerte Skalierbarkeit der Schlüssellänge und die Bereitstellung hochsicherer Schlüssel, sondern auch die Erzeugung solcher Schlüssel, ohne dass Designanpassungen am MEMS-Bauteil oder mehrere Bauteile oder die Erzeugung mehrerer Schlüssel für ein einzelnes MEMS-Bauteil notwendig sind.

Darüber hinaus sind MEMS-basierte PUFs ferner dahingehend besonders vorteilhaft, dass keine separaten bzw. zusätzliche Komponente notwendig ist, um eine Sicherheitsfunktion zu implementieren.

Stattdessen weisen vorteilhaft MEMS-Bauteile inhärent bereits stets kleine, nichtvermeidbare herstellungsbedingte Abweichungen auf, wie beispielsweise Abweichungen in der geometrischen Struktur oder den Materialparametern. Dadurch zeichnet sich jedes MEMS-Bauteil durch intrinsische, nicht reproduzierbare bzw. nicht kopierbare Eigenschaften aus. Diese zufälligen physikalischen bzw. physischen Eigenschaften bedingen als Antwort auf eine Anregung (Challenge) ein charakteristisches Verhalten, welches als Messignal erfasst und weiterverarbeitet werden kann, um eine Antwort (Respons) zu erhalten. Die Response wird bevorzugterweise in einer binären Zeichenfolge bereitgestellt bzw. als solche codiert. Um ein MEMS-Bauteil besonders effizient als Sicherheitsfunktion bzw. als PUF einsetzen zu können, sollte das Challenge-Response-Pair die intrinsischen Eigenschaften des Bauteils besonders zuverlässig abbilden.

MEMS-Bauteile finden Anwendungen in einer Vielzahl von technologischen Bereichen und werden in ihrer eigentlichen Funktion beispielsweise als Sensoren oder Aktoren eingesetzt.

Vorteilhaft erlaubt das erfindungsgemäße Verfahren zudem eine Dual-Use-Funktionalität des MEMS-Bauteils. So kann ein MEMS-Bauteil gleichzeitig für seine eigentliche Anwendung (z.B. als Sensor oder Aktor im Anwendungsmodus) und als Sicherheitsfunktion unter Anregung des MEMS-Bauteils bei einer PUF-Mode mit einer Eigenfrequenz, welche sich von der Frequenz, welche zur Anregung des MEMS-Bauteils in seiner Anwendung geeignet ist, unterscheidet. Vorzugsweise ist die Anwendungsfrequenz, welche zur Anregung des MEMS-Bauteils in seiner Anwendung genutzt wird, eine Eigenfrequenz von der Anwendungsmode des MEMS-Bauteils, wobei sich die Anwendungsmode von der PUF-Mode unterscheidet.

So ist kein zusätzliches Bauteil bzw. keine weitere Komponente erforderlich, um die Sicherheitsfunktionen zu ermöglichen. Dazu wird das MEMS-Bauteil bei einer PUF-Mode angeregt, um die Sicherheitsfunktion auszuführen und für den Betrieb bzw. zum Ausführen der Anwendung, entsprechend bei einer anderen Frequenz bzw. bei einer anderen Modebetrieben. Insbesondere kann ein MEMS-Bauteil mehrere Anwendungsfrequenzen oder Anwendungsmoden haben, wenn es beispielsweise durch verschiedene Betriebsmodi oder Schwingungsformen unterschiedliche Funktionalitäten bereitstellt. In vielen Anwendungen entspricht die Anwendungsmode der Grundmode des MEMS-Bauteils. Die Grundmode bezeichnet bevorzugterweise die Eigenmode niedrigster Frequenz. Die Anwendungsfrequenz ist mithin vorzugsweise eine niedrigste Frequenz zur Anregung einer Grundmode des MEMS-Bauteils.

In bisherigen Lösungen des Standes der Technik wird ein MEMS-Bauteil nicht nur für die eigentliche Anwendung mittels einer Anwendungsmode betrieben, sondern darüber hinaus auch für die Extraktion eines Sicherheitsschlüssels. In bisherigen Lösungen wurde davon ausgegangen, dass die Anregung des MEMS-Bauteils bei Moden, welche nicht für die Anwendung vorgesehen sind, nachteilig ist, weil diese keine hinreichende Antwort des MEMS-Bauteils erzeugen oder mit der Funktion des MEMS-Bauteils interferieren. Jedoch wurde durch die Erfinder erstmalig erkannt, dass eine Anregung bei einer dezidierten PUF-Mode, deren Eigenfrequenz sich von einer Anwendungsfrequenzunterscheidet, bereits zu einer höheren Entropie und somit verbesserter Möglichkeit einer Nutzung des MEMS als PUF dienen kann.

In bisherigen Lösungen war die gängige Strategie eine design- oder hardwareseitige Optimierung der MEMS-PUF, um so eine möglichst hoher Entropie zu erreichen. Dies ist zumeist mit einem erhöhten Aufwand verbunden, wobei die design- oder hardwareseitige Optimierung der MEMS-Bauteile in Bezug auf eine PUF-Erzeugung sich auch nachteilig auf die eigentliche Anwendung auswirken kann. Zusätzliche Hardware-Elemente führen z.B. zu einem erhöhten Platzbedarf oder können mit der Sensorfunktion interferieren.

Die Erfinder haben stattdessen erkannt, dass MEMS-Bauteile bei einer entsprechenden Anregung außerhalb der Anwendungsfrequenz zu besonders sicheren Schlüsseln führen. Hardwareseitige Anpassungen sind hierzu nicht notwendig. So können besonders vorteilhaft Kosten und Komplexität des Systems gespart werden und gleichzeitig ein hochsicherer kryptografischer Schlüssel bereitgestellt werden.

Die Erfinder haben erkannt, dass insbesondere PUF-Moden mit einer Eigenfrequenz, die höher ist als eine Anwendungsfrequenz, bevorzugt höher ist als sämtliche Anwendungsfrequenzen des MEMS-Bauteils besonders geeignet für eine Entropiesteigerung sind. Ohne notwendigerweise auf eine Theorie beschränkt zu sein, kann dies zumindest teilweise darin liegen, dass höhere Frequenzen in der Regel empfindlicher gegenüber geometrischen und/oder materialbezogenen Abweichungen des MEMS-Bauteils sind und somit zu besonders starken Entropieerhöhungen führen.

Ferner hat sich gezeigt, dass eine Kombination von Moden bzw. Frequenzen umfassend eine Mehrzahl von PUF-Moden, d.h. zwei oder mehr PUF-Moden, und/oder mindestens eine PUF-Mode und eine Anwendungsfrequenz als Anregungssignal besonders geeignet ist. Bevorzugterweise kann das Anregungssignal einen Frequenzbereich umfassen, bevorzugterweise eine Mehrzahl von Moden, beispielsweise zwei oder mehr PUF-Moden und/oder mindestens eine PUF-Mode und eine Anwendungsmode bzw. eine Anwendungsfrequenz. Ebenfalls kann es bevorzugt sein, eine sequenzielle Anregung mit einem Anregungssignal umfassend eine Anwendungsfrequenz, und im Anschluss eine Anregung mit einer zweiten (von der ersten verschiedenen) Mode durchzuführen, wobei mindestens eine der Moden eine PUF-Mode und keine Anwendungsmode darstellt. Im Kontext der Erfindung meint eine Anregung mit einem Anregungssignal umfassend Anwendungsfrequenz vorzugsweise eine Frequenz und/oder eine Mode, welche dafür geeignet ist, dass MEMS-Bauteil im Hinblick auf dessen Anwendung (z.B. als Sensor oder als Aktuator) anzuregen. Die Anwendungsfrequenz kann, muss aber nicht, in bevorzugten Ausführungsformen die Eigenfrequenz einer Anwendungsmode sein. Insbesondere kann es auch bevorzugt sein, dass das MEMS-Bauteil für eine Anwendung konfiguriert ist, wobei eine Ausführung der Anwendung des MEMS-Bauteils unter Ausnutzung mindestens einer Anwendungsmode erfolgt, während die Anregung in der Anwendung in einem Frequenzband nahe oder abseits der Eigenfrequenz, der mindestens einen Anwendungsmoder liegen kann.

Die Anwendungsfrequenzen zur Anregung der Anwendung des MEMS-Bauteils bzw. die Anwendungsmoden und PUF-Moden können von der Art der MEMS-Bauteile abhängen, wie im Folgenden näher erläutern.

Bevorzugte MEMS-Bauteile können beispielsweise piezoelektrische Cantilever sein. Die einseitig eingespannten Biegebalken sind besonders geeignet als MEMS-basierte PUFs, da ihre Modenspektren, insbesondere aufgrund der Elektrodenstrukturen, sehr sensitiv auf die Fertigungstoleranzen bzw. Abweichungen der mechanischen Geometrien und/oder Variationen der elektrischen Felder reagieren. Insbesondere bei höheren Schwingungsmoden, also bei Schwingungsmoden mit einer Frequenz höher als die Frequenz einer Grund- bzw. Anwendungsmode, führen Asymmetrien zu großen Sensitivitäten, da sie zusätzliche Momente verursachen, die mit geeigneten Ausleseanordnungen, wie z.B. Elektrodenkombinationen, elektronisch detektiert werden können. Derartige höherfrequente Schwingungsmoden lassen sich daher sehr gut als PUF-Moden verwenden.

Weiterhin können bevorzugte MEMS-Bauteile auch beispielsweise kapazitative MEMS-Strukturen wie z.B. Kammstrukturen in Beschleunigungssensoren sein. Diese verfügen neben den anwendungsrelevanten Moden, in der Regel, je Freiheitsgrad über weitere, insbesondere höherfrequente Mode. Die höherfrequenten Moden sind üblicherweise irrelevant für Anwendungsfunktionen, z.B. als Sensor, und finden daher im bisherigen Betrieb in der Regel keine Berücksichtigung. Dabei umfassen diese weiteren, höherfrequenten Moden bevorzugterweise Finger- und/oder Federmoden, besonders bevorzugt überlagerte Finger- und Federmoden. Durch die Nutzung dieser Nicht-Anwendungsmoden, oder Kombinationen daraus, als PUF-Moden im erfindungsgemäßen Verfahren kann die extrahierte Entropie eines MEMS-Bauteils und so die Sicherheit der PUF maßgeblich erhöht werden.

Im Falle schwingfähiger Systeme ist die Anwendungsmode zumeist die Grundmode. Bevorzugt können die Grundmode, Eigenmoden, (Anwendungs-)Frequenz zum Anregen einer Anwendung und/oder Eigenfrequenzen eines schwingungsfähigen Systems, wie etwa eines Cantilevers oder einer Kammstruktur, analytisch aus der zugehörigen mathematischen Beschreibung der Schwingung berechnet oder angenähert werden, üblicherweise unter Verwendung einer partiellen Differenzialgleichung (PDE). Alternativ ist es möglich, die Moden und/oder Frequenzen experimentell zu ermitteln.

Im Fall eines Cantilevers gilt für die Resonanzfrequenz *f*_0 der Grundmode, dass ${f}_{0} ∝ \frac{1}{{L}^{2}}$, wobei L die Länge des Cantilevers beschreibt. Diese inverse quadratische Abhängig impliziert, dass ein längerer (kürzerer) Cantilever eine niedrige (höhere) Resonanzfrequenz aufweist. Neben der Grundmode gibt es weitere Eigenmoden mit Eigenfrequenzen *fₙ* eines Cantilevers. Dabei ist dem Fachmann bekannt, dass jede höhere Mode mehr Knotenpunkte (Punkt ohne Bewegung) aufweist somit eine komplexere Schwingungsform umfasst. Insbesondere nehmen die Resonanzfrequenzen eines Cantilevers mit *n*² zu, wobei sich n auf die n-te Mode bezieht. Dabei ist *fₙ* ∝ *n*²*f*₀ eine gute Näherung, wobei die Resonanzfrequenz zusätzlich auch von der genauen Geometrie, den Materialeigenschaften und der Steifigkeit des Cantilevers abhängt. Höhere Eigenmoden haben somit wesentlich höhere Frequenzen und die Amplitudenverteilung entlang des Cantilevers ist für höhere Eigenfrequenzen zunehmend komplexer.

Ein kapazitiver Beschleunigungssensor umfasst bevorzugt eine bewegliche Masse (*proof mass*), die mechanischen Ausstülpungen oder Vorsprünge (Finger) bzw. eine Kammstruktur umfasst. Insbesondere kann die Kammstruktur in der Regel als Cantilever-Struktur aufgefasst werden. Diese Finger bewegen sich vorzugsweise zusammen mit der Masse, wenn diese eine Bewegung vollführt. Die bewegliche Masse kann vorzugsweise mittels einer mechanischen Aufhängung, bevorzugterweise mittels elastischer Federn, in einem festen Rahmen befestigt sein, wobei die Federn zwischen der Masse und einem festen Punkt wirken. Dadurch kann sich die Masse insbesondere in eine Richtung (die durch eine Beschleunigung verursacht wird) bewegen. Ein Beschleunigungssensor misst die Beschleunigung entlang einer (einachsiger Beschleunigungssensor) oder mehrere Achsen (mehrachsiger Beschleunigungssensor). Die Federn halten die Masse in ihrer Ruhelage und bieten eine elastische Rückstellung, sodass die Bewegung der Masse begrenzt wird.

Die Masse wird bevorzugt durch das Ansteuern von Elektroden angeregt. Die Elektroden können als Platten bereitgestellt werden, die sich in der Nähe der beweglichen Masse befinden. Zwischen zwei Elektrodenplatten wird eine Kapazität gebildet, die von der Fläche der Elektroden und dem Abstand zwischen ihnen abhängt. Üblicherweise wird eine Veränderung der Kapazität gemessen, die umgekehrt proportional zum Abstand zwischen den Platten ist. Somit wird durch die Messung der Kapazität eine Änderung des Abstands erkannt. Eine größere Beschleunigung führt zu einer stärkeren Verschiebung der Masse, was den Abstand zwischen den Platten stärker verändert und somit die Kapazität stärker variiert.

In einer bevorzugten Ausführungsform eines kapazitiven Beschleunigungssensors umfassend eine Anordnung mehrerer Finger nebeneinander wird das Verhalten der Masse in Bewegung durch die mechanische Kopplung der Finger verändert. Dies führt in der Regel zu kollektiven Schwingungsmoden, bei denen kleinste Änderungen in der Geometrie durch ein einzigartiges Schwingungsverhalten erkennbar werden. Besonders bei höheren Moden wird das Schwingungsverhalten durch die Kopplung der Finger verstärkt, was zu einer stärkeren Einzigartigkeit und Eindeutigkeit des Schwingungsverhaltens führt. Während die höheren Moden somit in Bezug auf die Sensorfunktion nicht von Vorteil sind und diese daher nicht als Anwendungsmoden genutzt werden, haben die Erfinder erkannt, dass eine sich diese Moden für eine Sicherheitsfunktion und die Erzeugung hochsicherer Schlüssel besonders gut eignen.

In gleicherweise haben auch andere MEMS-Bauteile eine Mehrzahl von Moden bzw. ein Modenspektrum, sodass durch eine geeignete Anregung verschiedene Moden, insbesondere eine PUF-Mode, bevorzugterweise eine höherfrequente PUF-Mode oder ein Messignal umfassend eine Mehrzahl von Moden, gemessen werden können. In bevorzugten Ausführungsformen wird das MEMS-Bauteil zur Erzeugung des kryptographischen Schlüssels mit einer Frequenz angeregt, welche einer Eigenfrequenz einer PUF-Mode des MEMS-Bauteils entspricht oder diese zumindest umfasst. Die Frequenz unterscheidet sich vorzugsweise von jener (Anwendungs-)frequenz, welche dafür genutzt wird das MEMS-Bauteil in dessen Anwendung anzuregen. Vorzugsweise erfolgt die Anregung des MEMS-Bauteils in der Anwendung unter Ausnutzung der mindestens einen Anwendungsmode, während die Anregung in einem Frequenzband nahe oder abseits einer Eigenfrequenz, der mindestens einen Anwendungsmode liegen kann.

Bevorzugt umfasst das Messignal die mindestens eine PUF-Mode, bevorzugterweise zwei PUF-Moden, ganz bevorzugterweise eine Mehrzahl an Moden, somit wird bevorzugt nicht nur eine Frequenz, sondern ein Schwingungsverhalten über eine Vielzahl von Frequenzen bzw. einen Frequenzbereich erfasst, wobei mindestens eine Nicht-Anwendungsmode umfasst ist. Durch die Erfassung eines Messsignals bei einer PUF-Mode, vorzugsweise einer Nicht-Anwendungsmode wird vorteilhaft die Extraktion an Informationsgehalt über die Einzigartigkeit eines MEMS-Bauteils erhöht ohne Designanpassungen oder Kombinationen mehrerer MEMS-Bauteile einbeziehen zu müssen.

Ein mikroelektromechanisches System (MEMS) ist bevorzugt ein mikroskopisches System, eine Baugruppe oder ein Bauteil, welches mechanische und elektronische Komponenten miteinander kombiniert, sodass diese zur Erfüllung einer Funktion (Anwendung) zusammenwirken können. MEMS-Bauteile können Sensoren, Aktoren, Oszillatoren oder Filter umfassen und finden beispielsweise Anwendung in Beschleunigungssensoren, Drucksensoren, Gyroskopen, Mikrofonen, Motoren oder Lautsprechern. Sie sind aufgrund ihrer geringen Größe und der Integration mechanischer und elektronischer Funktionen besonders relevant für moderne Technologien. Bevorzugterweise wandeln MEMS-Bauteile elektrische und/oder mechanische Energie um und können insbesondere dazu verwendet werden, mechanische Bewegungen, Vibrationen und/oder Messänderungen zu erfassen, ein elektrisches Feld in eine mechanische Bewegung umzuwandeln und/oder mechanische Vibrationen zu erfassen und in elektrische Energie umzuwandeln, um diese Energie in elektrischen Systemen zu nutzen.

MEMS-Bauteile weisen in der Regel einzigartige intrinsische Merkmale auf, ähnlich einem einzigartigen Fingerabdruck, die auf der inhärenten Variabilität des Herstellungsprozesses, bevorzugterweise der Silizium- Herstellungsprozesses, beruhen (aufgrund von Herstellungs- und Materialfehlern sowie Umweltfaktoren, die nicht völlig ausgeschlossen werden können), derart, dass jedes MEMS-Bauteil bzw. jede MEMS-basierte Struktur einzigartige intrinsische Eigenschaften aufweist. Diese physikalischen bzw. physischen Eigenschaften erzeugen als Antwort auf eine Anregung eine charakteristische Antwort, beispielsweise ein charakteristisches Resonanzspektrum bzw. Schwingungsverhalten. Daraus kann ein kryptografischer Schlüssel kodiert werden. Ohne die Bereitstellung des physischen MEMS-Bauteils ist eine Erzeugung des kryptografischen Schlüssels nicht möglich, sodass ein intrinsischer Kopierschutz gewährleistet werden kann. Informationen über den kryptografischen Schlüssel können durch die Anregung des MEMS-Bauteils mittels eines Anregungssignales und/oder durch das Erfassen von Messwerten gewonnen werden.

Die intrinsische Einzigartigkeit eines MEMS-Bauteils kann genutzt werden, um eine eindeutige Bitfolge zu erstellen, welche als kryptografischer Schlüssel verarbeitet und für eine Identifikation und/oder Authentifizierung eines Bauteils dienen kann. Das MEMS-Bauteil kann durch seine intrinsische Einzigartigkeit als PUF-Element dienen. Bei MEMS-basierten PUFs ist vorteilhaft keine externe Speicherung eines Schlüssels notwendig, da das Bauteil die einzigartigen Eigenschaften intrinsisch umfasst und diese durch eine geeignete Anregung ermittelt werden können. Dadurch sind MEMS-basierte PUFs besonders sicher und ermöglichen eine praktische Umsetzung eines Sicherheitskonzeptes. Insbesondere ermöglicht es das erfindungsgemäße Verfahren bzw. System, durch die Verwendung der PUF-Mode, einen hochsicheren Schlüssel zu generieren, ohne die Komplexität, den Aufwand oder die Kosten zu erhöhen, wie es bei bisherigen Lösungen des Standes der Technik der Fall ist, die oft die Kombination mehrerer Bauteile erfordern. Erst dadurch können MEMS-basierte PUFs ihre Vorzüge vollständig entfalten.

MEMS-Bauteile können auf unterschiedlichen Anregungs- und/oder Messprinzipien basieren und umfassen häufig Basisstrukturen wie Biegebalken bzw. Cantilever, Membrane Feder-Masse-Dämpfe Systeme. Beispielsweise werden piezoelektrische MEMS-Bauteile als Sensoren, Aktoren oder Resonatoren eingesetzt, beispielsweise für Vibrationsmessungen oder Ultraschallanwendungen. Piezoresistive MEMS-Bauteile werden beispielsweise als Druck- oder Beschleunigungssensoren eingesetzt und finden beispielsweise Anwendungen in der Automobilindustrie und in der Medizintechnik. Kapazitive MEMS-Bauteile nutzen bevorzugterweise Kapazitätsänderungen zwischen beweglichen und festen Elektroden und werden beispielsweise als Drucksensoren oder Mikrofone, beispielsweise in Smartphones oder Industrieanwendungen genutzt.

MEMS-Bauteile werden in der Designphase zunächst mit idealen Eigenschaften entworfen. Zum Beispiel werden die bei kapazitiven Inertialsensoren üblichen Kammelektroden in vereinfachten Modellen als Plattenkondensatoranordnung mit ebenen Oberflächen betrachtet. Während der hochpräzisen Fertigung, wie z.B. dem tiefe reaktive Ionenätzen (DRIE), treten jedoch Abweichungen auf, so dass raue Oberflächen entstehen, deren Struktur, Rauheit und/oder Form der Musterung von den verwendeten Prozessparametern, welche unweigerliche Schwankungen in Toleranzbereichen unterliegen. Ferner können beispielsweise die Oberflächen von Plattenkondensatoren nicht perfekt parallel zueinander angeordnet sein, sondern einen Abstandsverlauf, bzw. Aufweitungen oder Verengungen, aufweisen. Diese hängen beispielweise von verwendeten Ätzparametern und/oder von der Position eines MEMS-Sensors auf einem Wafer ab. Beispielweise können außenliegende Chips andere Winkel und Aufweitungen der Plattenkondensatoren aufweisen als in der Wafermitte befindliche Chips. In der Regel können Verschaltungen, wie zum Beispiel die Zuleitungen zu den Kapazitäten oder zu Piezokomponenten, aus gesputterten Metallen hergestellt sein. Üblicherweise sind die Höhe, die Mikrostruktur und/oder die flächenmäßige Ausdehnung durch die Herstellungsprozesse wie Abscheide- und/oder Strukturierungsbedingungen bestimmt und unterliegen daher stets typischen technologischen Schwankungen. Die daraus resultierenden elektrischen Parameter, wie z.B. die Kombinationen aus Leitungswiderständen, sind bevorzugterweise messbar. Diese Abweichungen und die resultierenden Effekte werden als Entropiequelle für die Erzeugung von gerätespezifischen Fingerabdrücken bzw. kryptografische Schlüssel genutzt.

Eine "PUF" (engl. physical unclonable function) bzw. ein PUF-Element meint bevorzugt ein Bauteil, welches aufgrund physischer Eigenschaften einen kryptographischen Schlüssel codiert. Der kryptografische Schlüssel ist bevorzugt mittels einer Recheneinheit bzw. eines Prozessors mindestens teilweise auslesbar. Das PUF-Element ist selbst nicht klonierbar. Dies bedeutet, dass bevorzugt keine physische Kopie des PUF-Elements angefertigt werden kann, welche den identischen kryptographischen Schlüssel codiert bzw. erzeugen kann. Die physischen bzw. physikalischen Eigenschaften zweier PUF-Elemente unterscheiden sich bevorzugt durch kleinste Schwankungen im Produktionsprozess, selbst wenn durch das Produktionsverfahren absolut gleiche Bauteile bereitgestellt werden sollten. Vorzugsweise umfasst die PUF bzw. das PUF-Element Bereiche, die eine Eingabe bzw. Anregung (Challenge) verarbeiten und daraus einen Rückgabewert bzw. eine Antwort (Response) erzeugen.

Üblicherweise wird das erfasste Messignal durch eine Nachbearbeitung zu einer Antwort (Response) codiert. Bevorzugterweise wird ein Challenge-Response-Pair (CRP) erhalten, welches der Bereitstellung oder Erzeugung eines kryptografischen Schlüssels und/oder zur Authentifizierung und/oder zur Identifizierung eines Gerätes dient. Der Nachbearbeitungsschritt bzw. das Postprocessing umfasst vorzugsweise eine Bereinigung des Messignales, um systematische Schwankungen zu entfernen. Systematische Schwankungen in einem Messignal erhöhen die Entropie nicht, da diese nicht durch die zufällige Einzigartigkeit und Eindeutigkeit eines MEMS-Bauteils, insbesondere basierend auf den intrinsischen Merkmalen aus dem Herstellungsverfahren, entstehen. Zu dem umfasst der Nachbearbeitungsschritt in der Regel ein Quantisierungsverfahren, um aus einem analogen Messignal eine binäre Bitfolge abzuleiten. Bevorzugterweise können die intrinsischen Eigenschaften eines MEMS-Bauteils, basierend auf dem Anregungssignal und dem Messignal, und unter Verwendung von Methoden, beispielsweise umfassend eine modale Analyse, Frequenzgangmessungen und/oder Dämpfungsanalysen ermittelt werden.

Ein "Anregungssignal" ist im Sinne der Erfindung bevorzugt ein Signal zur Anregung eines MEMS-Bauteils. Bevorzugt kann es sich bei dem Anregungssignal um ein elektrisches Signal handeln, welches direkt zur Ansteuerung bzw. Steuerung eines MEMS-Bauteils genutzt wird. Es kann aber ebenfalls bevorzugt sein, dass das Anregungssignal ein optisches, mechanisches oder akustisches Signal ist, welches dazu geeignet ist, das MEMS-Bauteil anzuregen. In einer bevorzugten Ausführungsform eines kapazitiven MEMS-Bauteils ist ein Anregungssignal vorzugsweise ein elektronisch generiertes Steuerungssignal, beispielsweise ein elektrischer Spanungsimpuls, welches zu einer gezielten Auslenkung führt. Besonders bevorzugt werden beispielsweise Fingern oder Federn einer Kammstruktur durch ein Anregungssignal in Schwingungen versetzt. In einer bevorzugten Ausführungsform eines piezoelektrischen MEMS-Bauteils ist ein Anregungssignal vorzugsweise eine gezielte elektrische Ansteuerung zur Erzeugung einer kontrollierten Deformation des piezoelektrischen Materials. In einer bevorzugten Ausführungsform eines MEMS-Bauteils in Form eines MEMS-Filters werden vorzugsweise elektronisch induzierte Schwingungsanregungen mit variabler Filtercharakteristik als Anregungssignal verwendet. Beispielsweise steuern digitale Signalprozessoren die Filterbandbreite und -charakteristik. Ein Anregungssignal umfasst vorzugsweise mindestens eine Mode, bevorzugterweise zwei oder mehrere Moden. Bevorzugt kann auch ein Modenspektrum und/oder. ein Frequenzbereich als Anregungssignal verwendet werden. Das Anregungssignal umfasst mindestens eine PUF-Mode, d.h. eine Mode mit einer Eigenfrequenz, welche sich von der Anwendungsfrequenz, die zur Anregung der Anwendung des MEMS-Bauteils geeignet ist, unterscheidet. Insbesondere kann eine Ausführung der Anwendung des MEMS-Bauteils unter Ausnutzung einer oder mehrerer Anwendungsmoden und/oder Frequenzen erfolgen, wobei auch Frequenzen zur Ausführung der Anwendung genutzt werden können, welche sich von einigen oder sämtlichen Eigenfrequenzen der Moden des MEMS-Bauteils unterscheiden. Insbesondere kann ein Anregungssignal beispielsweise ein kontinuierliches Signal sein, welches einen oder mehrere Frequenzbereiche umfasst. Bevorzugterweise kann ein Anregungssignal auch ein einzelner Impuls oder mehrere aufeinander folgende einzelne Impulse bzw. Dirac Pulse.

In bevorzugten Ausführungsformen der Erfindung, erfolgt eine Anregung eines MEMS-Bauteils mittels einer Recheneinheit. Eine Recheneinheit kann ein MEMS-Bauteil direkt mittels eines elektrischen Signales anregen. Zu diesem Zweck kann die Recheneinheit ein elektrisches Ausgangssignal erzeugen, welches als Anregungssignal an einen Eingang des MEMS-Bauteils übermittelt wird. Das Anregungssignal kann in diesem Fall bevorzugt als Steuerungssignal verstanden werden, welches das MEMS-Bauteil ausgehend von der Recheneinheit direkt ansteuert bzw. anregt.

In weiteren bevorzugten Ausführungsformen kann es jedoch auch bevorzugt sein, dass eine Recheneinheit ein Steuerungssignal an eine (externe) Anregungseinheit übermittelt, welche daraufhin ein Anregungssignal an das MEMS-Bauteil übermittelt. Das Anregungssignal wird in diesen Ausführungsformen also indirekt an das MEMS-Bauteil übermittelt. Das Steuerungssignal ist vorzugsweise ein elektrisches Signal. Das Anregungssignal, welches durch die Anregungseinheit ausgelöst bzw. generiert wurde, kann ebenfalls ein elektrisches Signal sein, es kann aber insbesondere auch vorzugsweise ein optisches, mechanisches, kapazitives oder akustisches Signal sein.

Im Sinne der Erfindung beschreibt eine "Mode" bevorzugt eine spezifische Art einer Schwingung oder Bewegung eines Systems bzw. MEMS-Bauteils, welches in einem stabilen Zustand oder im Gleichgewicht ist. Eine Mode ist insbesondere durch eine Eigenfrequenz und eine Form der Schwingungen, die Modenform, gekennzeichnet. Die Eigenfrequenz gibt vorzugsweise an, wie oft sich das System in einer bestimmten Zeit wiederholt. Insbesondere sind die Eigenfrequenzen eines MEMS-Bauteils von der Geometrie, dem Material und der genauen Bauform des Bauteils abhängig. Die Modenform beschreibt vorzugsweise, wie sich das System bzw. das MEMS-Bauteil bei dieser Eigenfrequenz bewegt, z.B. durch Biegung, Dehnung oder Rotation. Auch die Modenform wird durch die intrinsischen physikalischen Eigenschaften eines MEMS-Bauteils beeinflusst. Dabei kann die Modenform als Eigenvektor mit der Eigenfrequenz als zugehörigem Eigenwert in einem entsprechenden Eigenwertproblem aufgefasst werden, welches sich in der Regel aus der linearen Schwingungsanalyse ergibt.

Im Sinne der Erfindung bezeichnet eine "Anwendungsfrequenz" vorzugsweise eine Frequenz, welche zur Ausführung der vorgesehenen Anwendung des MEMS-Bauteils im Betriebsmodus geeignet ist. Die Anwendungsfrequenz kann von sämtlichen Eigenfrequenzen des MEMS-Bauteils verschieden sein. Bevorzugterweise kann die Anwendungsfrequenz auch die Eigenfrequenz einer Anwendungsmode sein.

Im Sinne der Erfindung bezeichnet eine "Anwendungsmode" vorzugsweise jene Mode eines MEMS-Bauteils, welche zur Ausführung der vorgesehenen Anwendung des MEMS-Bauteils im Betriebsmodus vorgesehen ist.

Das MEMS-Bauteil ist in der Regel für eine Anwendung, zum Beispiel als Aktor oder Sensor, konfiguriert. Die Anwendung des MEMS-Bauteils kann in der Regel durch die Anregung mittels eines Anregungssignales aktiviert werden. Insbesondere umfasst das Anregungssignal zur Ausführung bzw. Aktivierung der Anwendung des MEMS-Bauteils die Frequenzen, welche zur Anregung des MEMS-Bauteils in seiner Anwendung geeignet ist. Insbesondere kann ein MEMS-Bauteil eine Mehrzahl von Frequenzen, die zur Anregung der Anwendung des MEMS-Bauteils geeignet sind, haben. Eine Ausführung der Anwendung des MEMS-Bauteils kann vorzugsweise unter Ausnutzung der Anwendungsmode(n) erfolgt, während die Ausführung in einem Frequenzband nahe oder abseits der Eigenfrequenz der einen oder mehreren Anwendungsmode(n) liegen.

Nahe der Eigenfrequenz kann vorzugsweise eine Abweichung von weniger als 10%, 5%, 1% oder weniger bedeuten.

Eine "PUF-Mode" oder "Nicht-Anwendungsmode" ist im Sinne der Erfindung bevorzugt eine Mode mit einer Eigenfrequenz, welche sich von der Anwendungsfrequenz unterscheidet. Bevorzugterweise ist die Eigenfrequenz höher als eine Frequenz, besonders bevorzugt höher als einige und ganz besonders bevorzugt, höher als sämtliche Frequenzen, welche sich zur Anregung des MEMS-Bauteils in seiner Anwendung genutzt werden. In bevorzugten Ausführungsformen, in denen das MEMS-Bauteil in der Anwendung mittels einer Anwendungsmode angeregt wird, ist die Eigenfrequenz der PUF-Mode verschieden von der, bevorzugterweise höher als die, Eigenfrequenz der Anwendungsmode. Durch eine Anregung mittels des Anregungssignales kann ein spezifisches Resonanzspektrum bzw. ein Schwingungsverhalten des MEMS-Bauteils erprobt werden. Das charakteristische Resonanzspektrum und/oder Schwingungsverhalten hängt dabei von den individuellen physikalischen Eigenschaften des MEMS-Bauteils und der Anregung ab.

Die Anwendungsfrequenz, eine Anwendungsmode und/oder eine PUF-Mode kann für ein MEMS-Bauteil vorzugsweise analytisch, üblicherweise durch ein rigoroses oder approximatives Lösen einer partiellen Differentialgleichung (PDE) oder experimentell mittels messtechnischer Methoden ermittelt werden.

Ein "Messignal" ist im Sinne der Erfindung bevorzugt ein analoges Signal, welches als Reaktion auf eine Anregung des MEMS-Bauteils erfasst wird. Bevorzugterweise umfasst ein Messignal ein physikalisches und/oder elektrisches Signal bzw. Größe. Insbesondere umfasst das Messignal eine PUF-Mode. Vorzugweise umfasst das Messignal mithin eine Eigenfrequenz, welche zu einer Mode gehört, die sich von einer Anwendungsmode unterscheidet. Bevorzugterweise umfasst das Messsignal eine Überlagerung von Frequenzen. In einer besonders bevorzugten Ausführungsform eines kapazitiven MEMS-Bauteils, umfasst das Messignal eine Frequenz oder eine Überlagerung von Frequenzen, welche zu Finger- und/oder Federmoden gehören. Bevorzugterweise kann ein Messignal Informationen über verschiedene räumliche Orientierungen umfassen.

Insbesondere von schwingfähigen Strukturen, besonders bevorzugt von schwingfähigen Strukturen, deren intrinsische Merkmale sich durch geometrische Variationen auszeichnen, können Messungen in einer x-y-Ebene und/oder z-Richtung von besonderem Interesse sein. Die z-Richtung beschreibt hierbei die Richtung orthogonal auf einer Ebene (der x-y Ebene), in der das MEMS-Bauteil liegt. Die x-y-Ebene, in welcher das MEMS-Bauteil liegt, entspricht vorzugsweise der Ebene des Substrates oder des Wafers in welchem das MEMS gefertigt wurde und kann vorliegend auch vorzugsweise als horizontale Ebene bezeichnet werden. Die darauf senkrecht stehende z-Richtung kann im Sinne der Erfindung auch als vertikale Richtung bezeichnet werden. Bevorzugterweise umfasst das Messsignal, Messungen in der x-y Ebene, in der z-Dimension oder aus der x-y und z Dimension.

Bevorzugte elektronisch auslesbare Kenngrößen sind beispielsweise Schwingungsmoden, Kapazitäten und Widerstände. Dabei werden physikalische Größen bevorzugterweise mittels eines MEMS-Bauteils in elektrische Signale umgewandelt. Diese elektrischen Signale werden besonders bevorzugt durch geeignete Schaltungen, einen Prozessor oder eine Recheneinheit, beispielsweise in Form eines integrierten ASICs, ausgelesen.

Insbesondere werden für piezoresistive MEMS-Bauteile, umfassend piezoresistive Materialien, üblicherweise Widerstandsänderungen des piezoresistiven Materialies gemessen, welche als Ergebnis von aufgebrachten Spannungen auftreten. Bei kapazitiven MEMS-Sensoren werden bevorzugterweise Kapazitätsänderung zwischen einer festen und einer beweglichen Platte gemessen, die bevorzugt durch Vibration einer beweglichen Platte verursacht werden können. Bei piezoelektrischen MEMS-Sensoren werden bevorzugt Ladungsänderungen oder elektrische Spannungen gemessen, die bevorzugterweise durch mechanische Verformungen des piezoelektrischen Materials beispielsweise durch Vibrationen erzeugt werden.

In bevorzugten Ausführungsformen sind Kombinationen von externer und/oder interner Anregung und/oder Kombinationen des Erfassens von Messignalen möglich.

In bevorzugten Ausführungsformen kann das Messignal direkt von dem MEMS-Bauteil ausgelesen werden. Insbesondere wird diese Konfiguration, welche eine direkte Messung umfasst, auch als "built-in" System bezeichnet. Bevorzugterweise wird dazu eine elektrisch bzw. elektronisch auslesbare Kenngrößen von dem MEMS-Bauteil, beispielsweise eine Kapazitäts- oder Widerstandsänderung, mittels der Recheneinheit erfasst.

In dieser Ausführungsform dient das MEMS-Bauteil selbst als Mess- bzw. Ausleseeinheit. In einem "built-in" System wird beispielsweise eine elektrische Anregung über eine Recheneinheit über eine Feedback-Schleife genutzt. Diese ermöglicht in der Regel bevorzugterweise eine präzise Reglung und kann beispielsweise für eine gezielte Resonanzanregung oder Schwingungssteuerung genutzt werden. In weiteren bevorzugten Ausführungsformen kann ein Messignal auch mittels einer externen Ausleseeinheit erfasst werden. Entsprechend wird diese Konfiguration auch als "built-off' System bezeichnet. Eine geeignete Wahl der externen Ausleseeinheit kann dabei von dem verwendeten MEMS-Bauteil abhängt. Diese kann beispielsweise für die Erfassung eines elektrischen oder mechanischen Signals sowie für eine Kombination aus Antwortsignalen ausgelegt sein. Bevorzugterweise kann beispielsweise eine externe Ausleseeinheit in Form einer optischen Ausleseeinheit, z.B. eines Laservibrometers, vorliegen, welche die Antwort eines MEMS-Bauteils auf eine Anregung mittels optischer Mittel als Messsignales erfasst. In einem "built-off" System kann beispielsweise ein Shaker oder ein Piezoplättchen durch ein elektrisches Signal angeregt werden, sodass physische Vibrationen erzeugt werden, welche das MEMS-Bauteil anregen. Alternativ könnte ein elektrisches Signal, vorzugsweise ein Hochspannungs- oder Hochfrequenzsignal mittels einer externen Recheneinheit zur Anregung eingespeist werden.

Eine Messeinheit ist bevorzugt zur Messung der Schwingungseigenschaften und insbesondere zur Messung eines zeitlichen Verlaufs der Schwingungseigenschaften geeignet. Die Schwingungseigenschaften der Struktur bzw. deren zeitlichen Verlauf stellen vorzugsweise Schwingungsantworten (Response) auf anregende Signale (Challenges) dar, mittels derer, wie beschrieben, Informationen über den kryptographischen Schlüssel erfasst werden können.

Der Begriff "Recheneinheit" bzw. Prozessor bezieht sich vorzugsweise auf ein beliebiges Gerät oder eine beliebige Einheit, die dazu konfiguriert werden kann, Rechenoperationen durchzuführen. Bevorzugt ist die dazu konfiguriert, ein Anregungssignal an das MEMS-Bauteil zu senden und/oder ein Messsignal von dem MEMS-Bauteil zu empfangen.

Die Recheneinheit kann das MEMS-Bauteil vorzugsweise direkt mittels eines elektrischen Signales anregen oder dessen Antwort messen. Zu diesem Zweck kann die Recheneinheit ein elektrisches Ausgangssignal erzeugen, welches als Anregungssignal an einen Eingang des MEMS-Bauteils übermittelt wird und/oder ein elektrisches Messsignal des MEMS-Bauteils empfangen. Alternativ kann die Recheneinheit das Anregungssignal indirekt an das MEMS-Bauteil übermitteln, in dem ein Steuerungssignal an eine (externe) Anregungseinheit gesandt wird, welche in Folge ein Anregungssignal an das MEMS-Bauteil übermittelt. Ebenso kann es bevorzugt sein, dass die Recheneinheit indirekt ein Messsignal des MEMS-Bauteils erfasst, indem beispielsweise ein Messsignal einer Messeinheit empfangen wird, welche die Antwort des MEMS-Bauteils auf eine Anregung erfasst. Erfindungsgemäß ist eine Recheneinheit bevorzugt ein logischer Schaltkreis, welcher Daten bzw. elektrische Signale senden, empfangen und verarbeiten kann. Bevorzugte Recheneinheit bzw. Prozessoren umfassen ohne Beschränkung eine integrierte Schaltung (IC), ein Anwendungsspezifische integrierte Schaltungen (ASIC), ein Field Programmable Gate Array (FPGA), einen Mikroprozessor, einen Mikrocomputer, eine speicherprogrammierbare Steuerung und/oder eine sonstige elektronische, bevorzugte programmierbare, Schaltungen.

Der Begriff "Recheneinheit konfiguriert um" einen bestimmten Arbeitsschritt auszuführen, wie z.B. eine Anregung mittels eines Anregungssignales oder ein Erfassen eines Messignales, kann eine spezielle oder eine standardmäßige Software bzw. Computercode umfassen, die auf der Steuereinheit installiert ist und diese Arbeitsschritte initiiert und reguliert.

Die Computer-Software und alle funktionalen Beschreibungen der Computer-Software durch die Beschreibung der Steuerung bestimmter Geräte oder Aspekte des hier beschriebenen Verfahrens und Systems werden als technische Merkmale betrachtet, da sie eine direkte physische Wirkung auf die Erzeugung des kryptographischen Schlüssels und/oder auf die Authentifizierung/Identifizierung eines Objekts auf Basis der physisch unklonierbaren Funktion (PUF) eines haben. Funktionsbeschreibungen von Software können daher als bevorzugte und definierende Ausführungsformen der Erfindung angesehen werden. Der jeweils verwendete Computercode steht dem Fachmann zur Verfügung und kann unter Verwendung von Standardwissen entsprechend konstruiert werden.

In bevorzugten Ausführungsformen wird ein "on-chip" System bereitgestellt, wobei eine Recheneinheit und eine MEMS-Bauteil auf demselben Chip angeordnet sind, d.h. vorzugsweise auf demselben Halbleitersubstrat angeordnet ist. Diese Systeme zeichnen sich vorteilhaft durch eine kompakte Bauweise aus.

In weiteren bevorzugten Ausführungsformen wird ein "off-chip" System bereitgestellt, welches MEMS-Bauteil und eine externe Recheneinheit umfasst, welche mit dem MEMS-Bauteil verbunden ist, wobei externe Recheneinheit meint, dass diese nicht auf dem Chip des MEMS-Bauteils angeordnet sein muss. Diese Konfiguration ist beispielsweise bevorzugt für Anwendungen, bei denen eine höhere Rechenleistung erforderlich ist oder wenn das MEMS-Bauteil in extremen Umgebungsbedingungen operieren muss. Hierbei kann eine Anregung ausgehend von der externen Recheneinheit durchgeführt und/oder eine Messung durch eine externe Recheneinheit erfasst werden.

Ein "kryptografischer Schlüssel" auf Basis einer PUF ist bevorzugt ein sicherer, einzigartiger Schlüssel bzw. eine Bit-Kombination, der direkt aus den physikalischen Eigenschaften eines Objekts generiert wird, das eine PUF umfasst. Der Schlüssel nutzt die einzigartigen und nicht replizierbaren Merkmale des Objekts, die bei der Herstellung entstehen, um einen geheimen Schlüssel oder Fingerabdruck zu erzeugen, der für kryptografische Operationen (wie z.B. eine Verschlüsselung oder Authentifizierung) verwendet wird. Bevorzugt weist ein kryptografischer Schlüssel im Unterschied zu einem bloßen Identifikationsmerkmal, welches zumindest ebenfalls einzigartig sein sollte, zusätzliche Merkmale wie beispielsweise eine hohe Entropie und/oder eine statistische Zufälligkeit auf, welche für kryptografische Anwendungen erforderlich sind.

Im Sinne der Erfindung ist die Identifizierung bzw. Authentisierung vorzugsweise in ihrer breitesten Form zu verstehen und kann jedes Verfahren betreffen, um eine Aktion oder einen Zugriff basierend auf erhaltenden Informationen über einen kryptographischen Schlüssel des PUF-Elementes zu gewährleisten. Darüber hinaus sollten jegliche Identifikations- oder Verifikationsverfahren abgedeckt werden, welche ebenfalls auf der Bereitstellung von Informationen über den kryptographischen Schlüssel basieren. Die Identifizierung bzw. Authentifizierung eines Objekts auf Basis einer MEMS-PUF beschreibt einen Sicherheitsmechanismus, bei dem die einzigartige physikalische Eigenschaft eines Objekts genutzt wird, um das Objekt eindeutig zu identifizieren oder zu authentifizieren. Häufig werden die Begriffe Identifikation und Authentifizierung von Objekten synonym verwendet. Unter Identifikation wird jedoch insbesondere die Feststellung der Identität eines Objekts verstanden, während mit der Authentifizierung eines Objekts die Legitimation der Identität des Objekts gemeint ist.

In bevorzugten Ausführungsformen dient das MEMS-Bauteil als eine *weak* PUF und weist nur eine geringe Anzahl von Challenge-Response Paaren (CRPs) auf. Insbesondere kann eine *weak* PUF in einigen bevorzugten Ausführungsformen nur ein einziges CRP umfassen. Bevorzugt werden *weak* PUFs beispielsweise zur Ableitung von kryptografischen Schlüsseln verwendet.

In weiteren bevorzugten Ausführungsformen dient das MEMS-Bauteil als eine *strong* PUF, welche eine hohe Anzahl an CPRs umfassen. Bevorzugt werden *strong* PUFs beispielsweise zur Authentifizierung von Herstellern zur Legitimierung ihrer Produkte verwendet.

In einer bevorzugten Ausführungsform ist das MEMS-Bauteil für eine Anwendung konfiguriert, wobei eine Ausführung der Anwendung des MEMS-Bauteils unter Ausnutzung der Anwendungsmode erfolgt. Vorzugsweise ist die Eigenfrequenz der PUF-Mode von der Eigenfrequenz einer Anwendungsmode des MEMS-Bauteils verschieden. Besonders bevorzugt ist die Eigenfrequenz der PUF-Mode höher als die Eigenfrequenz einer, bevorzugt einiger, besonders bevorzugt sämtlicher Eigenfrequenzen der Anwendungsmoden. Insbesondere wird durch höherfrequente Mode der Entropiegehalt besonders stark erhöht.

Die Anwendungsmode meint vorzugsweise jene Mode, mit welcher das MEMS-Bauteil zum Ausführen der Anwendung (z.B. einer Sensor- oder Aktuatorfunktion) angesteuert wird. Im Hinblick auf eine jeweilige Anwendung des MEMS-Bauteils hat eine MEMS-Bauteil mindestens eine Anwendungsmode. In einigen Ausführungsformen können auch mehrere Anwendungsmoden für den Betrieb des MEMS-Bauteils zu dessen Anwendung genutzt werden.

Zur Erzeugung des kryptographischen Schlüssels und/oder zur Identifizierung/Authentifizierung eines Objekts auf Basis einer physisch unklonierbaren Funktion (PUF) wird gerade keine Anwendungsmode genutzt, sondern eine Nicht-Anwendungsmode bzw. eine PUF-Mode verwendet, welche sich von der Anwendungsmode unterscheidet.

In bevorzugten Ausführungsformen ist die Anwendungsfrequenz, die Eigenfrequenz einer Anwendungsmode und die Anwendungsmode gleich der Grundmode des MEMS-Bauteils. Als Grundmode wird die Mode erster Ordnung oder auch die erste Mode bezeichnet. In diesem Fall wird das MEMS-Bauteil in Resonanz betrieben. In weiteren bevorzugten Ausführungsformen ist die Frequenz, welche zur Anregung des MEMS-Bauteils in seiner Anwendung geeignet ist, die Eigenfrequenz einer Anwendungsmode und die Anwendungsmode von der Grundmode verschieden. Auch in diesem Fall wird das MEMS-Bauteil in Resonanz betrieben.

MEMS-Bauteile wie beispielsweise Gyroskope, Mikrofone und Beschleunigungssensoren werden in der Regel nicht in Resonanz betrieben, während beispielsweise schwingfähige MEMS-Bauteile und MEMS-Mikrospiegel typischerweise in Resonanz, also mittels einer Eigenfrequenz einer Anwendungsmode, betrieben werden.

In einer weiteren bevorzugten Ausführungsform weist das MEMS-Bauteil bewegliche Abschnitte auf, wobei bevorzugt die beweglichen Abschnitte des MEMS-Bauteils horizontal und/oder vertikal auslenkbar sind.

Die beweglichen Abschnitte umfassen bevorzugt Bauelemente und/oder Abschnitte des MEMS-Bauteils. Sie können bevorzugt mechanische und/oder elektrische Informationen verarbeiten und/oder erzeugen. Bevorzugte MEMS-Strukturen sind für Sensoren und/oder Aktoren, aber auch Oszillatoren und/oder Filter geeignet. Die MEMS-Strukturen können bevorzugt charakteristische Abmaße im Mikrometerbereich (1 µm bis 1000 µm) aufweisen. Sie können aber auch bevorzugt kleiner als ein Mikrometer sein oder sich vorzugsweise über mehrere Mikrometer erstrecken. Die beweglichen Abschnitte können bevorzugt durch Translation bewegbar und/oder rotierbar sein.

Durch Translation bewegliche Abschnitte können insbesondere eine Translationsbewegung durchführen. Hierbei erfahren bevorzugt alle Punkte eines beweglichen Abschnittes dieselbe Verschiebung. Zu einem beliebigen Zeitpunkt sind Geschwindigkeiten und Beschleunigungen aller Punkte des beweglichen Abschnittes im Wesentlichen identisch. Insbesondere bewegen sich die Punkte eines beweglichen Abschnittes bei einer Translation auf parallelen Trajektorien. Durch Translation bewegliche Abschnitte sind beispielsweise geeignet für Beschleunigungssensoren.

Rotierbare bewegliche Abschnitte können insbesondere eine Rotationsbewegung durchführen. Vorzugsweise kann sich hierbei ein beweglicher Abschnitt um eine Rotationsachse bewegen. Die Rotationsachse kann, muss aber nicht, durch einen Massenmittelpunkt gehen. Insbesondere bleiben alle Punkte der Rotationsachse an ihrem Ort, während alle anderen Punkte sich in festem Abstand von der Rotationsachse auf einem senkrecht zur Achse liegenden Kreis oder Ellipse um denselben Winkel um sie herumbewegen. Rotierbare bewegliche Abschnitte eignen sich beispielsweise für Drehratensensoren bzw. Gyroskope.

Die beweglichen Abschnitte können bevorzugt auch schwingfähig sein. Schwingfähige bewegliche Abschnitte können eine Schwingung durchführen. Als Schwingungen werden bevorzugt zeitliche und/oder örtliche Schwankungen eines Punktes eines beweglichen Abschnittes bezeichnet. Unter Schwankung ist dabei die Abweichung von einem Mittelwert zu verstehen. Schwingungen können mit einem Freiheitsgrad oder mit einer Vielzahl von Freiheitsgraden erfolgen. Insbesondere umfasst eine Schwingung eine mögliche Verformung einer oder mehrerer MEMS-Strukturen, die vorzugsweise mechanische Schwingungen betreffen.

Die beweglichen Abschnitte können bevorzugt in Form einer Kammfingerstruktur vorliegen. Eine Kammfingerstruktur bezeichnet bevorzugt eine Anordnung, bei der die MEMS-Struktur ineinandergreifende Kammfinger umfassen. Diese Kammfinger können bevorzugt einzelne Elektroden bilden, welche ein System von Kondensatoren darstellen. Kondensatoren und damit Kammelektroden besitzen bevorzugt die Eigenschaft, dass sie eine nichtlineare Kennlinie aufweisen, die durch die Übertragungsfunktion zwischen elektrischer Spannung und elektrostatischer Kraft bzw. Auslenkung beschrieben wird. Eine derartige nichtlineare Kennlinie kann vorzugsweise gewünscht sein, um bei dem Grad der Auslenkung eine große Sensitivität für kleine Auslenkungen bzw. eine kleine Sensitivität für große Auslenkungen zu erhalten.

Vorzugsweise sind die beweglichen Abschnitte des MEMS-Bauteils vertikal und/oder horizontal auslenkbar. Eine horizontale Auslenkbarkeit umfasst bevorzugt eine Auslenkung entlang einer Ebene, innerhalb derer sich das MEMS-Bauteil befindet. Eine vertikale Auslenkbarkeit umfasst vorzugsweise eine Bewegung, die senkrecht zur Ebene ausgeführt werden kann, innerhalb derer sich das MEMS-Bauteil befindet.

Das MEMS-Bauteil kann somit ein sogenannter in-plane Sensor oder Aktor als auch als sogenannter out-of-plane Sensor oder Aktuator betrieben werden, sodass. Ein in-plane MEMS-Bauteil bezeichnet bevorzugt ein MEMS-Bauteil umfassend bewegliche Abschnitte, welche entlang einer (horizontalen) Ebene ausgelenkt werden können, in welcher sich das MEMS-Bauteil befindet. Ein out-of-plane Sensor bezeichnet bevorzugt ein MEMS-Bauteil umfassend bewegliche Abschnitte, welche senkrecht zur Ebene, entlang der sich das MEMS-Bauteil befindet, ausgelenkt werden können.

In einer besonders bevorzugten Ausführungsform umfasst das MEMS-Bauteil eine schwingfähige Struktur.

Eine schwingfähige Struktur kann beispielsweise eine schwingfähige und/oder schwingend gelagerte Membran oder einen Cantilever bzw. Biegebalken betreffen. Im Sinne der Erfindung bedeutet "schwingfähige Struktur" bevorzugt, dass die Struktur durch einen geeigneten Antrieb beispielsweise in Form eines Aktuators zu einer mechanischen Schwingung über längere Zeit angeregt werden kann, ohne dass es zu strukturellen Veränderungen (Beschädigungen) der Struktur kommt. Bevorzugterweise kann ein Messignal eine Schwingung sein, wie beispielsweise eine einfache Schwingung im Wesentlichen entlang einer Raumdimension und/oder um eine eindimensionale Achse herum. Ferner kann es sich auch um eine komplexe, räumlich mehrdimensionale Schwingung bzw. Schwingungsmode handeln. Insbesondere hängt das Messignal der schwingfähigen Struktur von der Anregung durch das Anregungssignal zu einer Schwingung ab. Insbesondere umfasst das Messignal einer Schwingung bevorzugt Informationen z.B. umfassend die Schwingungsamplitude, Schwingungsfrequenz, Phase der Schwingung bevorzugt gegenüber einem anregenden elektrischen Signal.

Insbesondere ist eine Schwingung bevorzugterweise im Wesentlichen oder zumindest teilweise periodisch und so vor allem zeitlich regelmäßig. Periodische Schwingungen, insbesondere über mehrere Perioden hinweg betrachtet, können vor zugsweise durch die Schwingungsmode beschrieben werden. Die Schwingungsmode ist vorzugsweise eine Form der Beschreibung bestimmter zeitlich stationärer Eigenschaften einer Schwingung. Verschiedene Schwingungsmoden unterscheiden sich insbesondere in der räumlichen Verteilung der Schwingungsintensität, wobei die Form der Schwingungsmoden vorzugsweise durch Randbedingungen bestimmt wird, unter denen sich die Schwingung ausbreitet. Diese Randbedingungen können z. B. durch das Material, die Abmessungen und/oder die Lagerung der schwingfähigen Struktur sowie mindestens eines auf die Struktur einwirkenden Kraftvektors (umfassend bevorzugt die nominale Größe und/oder die Richtung der einwirkenden Kraft) gegeben sein. Beispielsweise kann es bei einem schwingenden Cantilever mehrere Biegeschwingungsmoden geben, bei welchen sich der Cantilever entlang einer Vorzugsrichtung, beispielweise senkrecht zu einer Ebene der Aufhängung des Cantilevers durchbiegt, die sich insbesondere in der Schwingungsfrequenz, der maximalen Schwingungsamplitude sowie in dessen räumlichem Auftreten unterscheiden können.

Eine Biegeschwingungsmode ist dabei insbesondere dadurch gekennzeichnet, dass die Schwingung einen dynamischen Biegeprozess in Richtung im Wesentlichen einer Normalen zu einer Hauptebene des Cantilevers bzw. der schwingungsfähigen Struktur, beschreibt. Darüber hinaus kann jedoch auch weitere Schwingungsmodi geben, z. B. eine Torsionsmode, welche eine Schwingung in Form einer periodischen Verdrehungsbewegung der Struktur entlang einer Achse beschreibt. Ferner sind komplexere Moden, welche Überlagerungen anderer Moden darstellen, möglich. Ein Beispiel für eine komplexe Schwingungsmode ist die dachziegelartige (engl.: rooftileshaped) Vibrations-Schwingungsmode, z. B. eines Cantilevers, bei welcher der Cantilever zwischen dachziegelartigen Verformungszuständen hin und herschwingt. Bevorzugterweise eignen sich die höherfrequenten, komplexen und überlagerten Moden besonders gut als PUF-Moden, insbesondere ermöglichen diese die Erhöhung der Entropie. Vorteilhafterweise können insbesondere Torsionsmoden, Dachziegelmoden, Vibrations-Schwingungsmoden besonders geeignete für die Erzeugung einer hohen Entropie sein.

In weiteren einer bevorzugten Ausführungsform weist das MEMS-Bauteil eine Dual-use Funktionalität auf, wobei das MEMS-Bauteil in einem Anwendungsmodus für eine Anwendung mittels einer Anwendungsmode und in einem PUF-Modus mittels einer PUF-Mode zur Erzeugung des kryptographischen Schlüssels und/oder zur Authentifizierung des Objekts nutzbar ist. Insbesondere wird durch die Umsetzung der Dual-use Funktionalität der Einsatz des MEMS-Bauteils als Sensor, Aktor und/oder Filter und gleichzeitig als Sicherheitsfunktion ermöglicht.

Eine Dual-use Funktionalität ist besonders vorteilhaft, da MEMS-Bauteilen in einer Vielzahl von Anwendungen wie dem loT (Internet of Things) verwendet werden. Insbesondere können so Kosten und Aufwand für die Bereitstellung einer Sicherheitsfunktion reduziert werden, da keine separate Struktur notwendig ist. In der bevorzugten Ausführungsform, in der die Dual-Use Funktionalität eines MEMS-Bauteils genutzt wird, ist eine Recheneinheit bevorzugt dazu konfiguriert, so wohl eine Anregung gemäß dem Anwendungsmodus bzw. der Anwendungsmode als auch eine Anregung in dem Sicherheitsmodus mittels einer PUF-Mode zu erzeugen.

In einer weiteren bevorzugten Ausführungsform des Verfahrens umfasst das Verfahren zudem eine Anregung des MEMS-Bauteils in einer Anwendung mittels eines Anregungssignales umfassend eine Anwendungsfrequenz. Die Eigenfrequenz der PUF-Mode ist verschieden von der Frequenz, die zur Anregung der Anwendung genutzt wird. Die Anregung des MEMS-Bauteils in der Anwendung mittels der Anwendungsfrequenz kann dabei zeitlich sowohl vor als auch nach einer Anregung des MEMS-Bauteils mit einer Eigenfrequenz der PUF-Mode erfolgen.

Vorzugsweise wird die Anregung mit der PUF-Mode wie beschrieben zur Erzeugung des kryptografischen Schlüssels genutzt. Es kann aber auch bevorzugt sein, dass die Anregung mit der Anwendungsmode und das dabei bestimmte Messignal für die zur Erzeugung des kryptografischen Schlüssels berücksichtigt wird.

In einer bevorzugten Ausführungsform trägt eine Berücksichtigung des Messsignals der PUF-Mode zur Erhöhung der Entropie des MEMS-Bauteils als Entropiequelle im Vergleich zu einer erzeugten Entropie unter ausschließlicher Berücksichtigung einer mit einer Anwendungsfrequenz, vorzugsweise mit einer Eigenfrequenz einer Anwendungsmode ohne Berücksichtigung der PUF-Mode bei. Besonders bevorzugt kann die Erhöhung einen Faktor 2, 3, 4, 5 oder mehr betragen. In bevorzugten Ausführungsformen kann die Erhöhung der Entropie um einen Faktor 2, 3, 4, 5 oder mehr durch die Berücksichtigung der PUF-Mode über eine Berechnung der Shannon Entropie und/oder Min-Entropie-Schätzung quantifiziert werden.

Die Entropie ist insbesondere ein Maß eines Informationsgehalts bzw. einer Zufälligkeit eines Messsignales des MEMS-Bauteils. In anderen Worten ist die Entropie ein Maß für die Zufälligkeit einer datenerzeugenden Funktion, wie dem MEMS-Bauteil. Das Sicherheitslevel der PUF hängt dabei bevorzugt von der Qualität der Entropiequelle und der Vertrauenswürdigkeit der abgeleiteten Schlüssel ab.

In Bezug auf Einwegfunktionen bedeutet eine vorzugsweise volle Entropie, dass keine Muster in der mathematischen Abbildung gefunden werden können. Bevorzugterweise bezeichnet eine volle Entropie, die Entropie eines Schlüssels, welcher 128 Bit umfasst. Eine niedrige Entropie bedeutet vorzugsweise dagegen, dass Muster erkannt werden können, die zur Vorhersage weiterer Daten verwendet werden. Um eine binäre Sequenz zu erzeugen, die als sichere Verschlüsselung dienen kann, wird eine hohe Entropie benötigt. Dabei beschreibt eine Entropiequelle, wie ein MEMS-Bauteil, vorzugsweise die Quelle der Zufälligkeit, beispielsweise basierend auf physikalischen Variationen aus dem Fertigungsprozess des MEMS-Bauteils. Insbesondere ist zwischen Zufallsquellen, häufig basierend auf stochastischen physikalischen Prozessvariationen der Hardware, und Pseudo-Zufallsquellen, beispielsweise durch deterministische Algorithmen am Computer erzeugt, zu unterscheiden.

In bevorzugten Ausführungsformen wird mittels jedes MEMS-Bauteil ein kryptographischer Schlüssel mit einer Länge von mindestens 20 Bit, bevorzugt mindestens 30 Bit und besonders bevorzugt mindestens 40 Bit erzeugt. Diese sind in der Regel sicher für eine Geräteidentifizierung. In weiteren bevorzugten Ausführungen werden kryptographische Schlüssel mit einer Länge von mindestens 120 Bit, bevorzugt mindestens 128 Bit generiert. Insbesondere sind solche Schlüssel in der Regel hochsicher für kryptographische Anwendungen. Bevorzugterweise wird für die Beurteilung der Entropie die Shannon und/oder die Min-Entropie-Schätzung verwendet. Das Verständnis der Entropie im informationstheoretischen Verständnis geht auf Arbeiten von C. E. Shannon aus dem Jahr 1948 zurück.

Die Entropie H der diskreten Zufallsvariablen (Symbolen) *zᵢ* des Alphabets Z ist definiert als $H = - {\sum }_{\left\{z∈Z\right\}} P \left(z\right) ⋅ {log}_{2} \left(P\left(z\right)\right)$

Wobei *P*(·) die Wahrscheinlichkeitsmassenfunktion ist. Ein Entropiewert von 1 bedeutet, dass der Schlüssel den maximalen Informationsgehalt aufweist.

Ferner ist die maximum Entropie *H*_{{*max*}} für *N* Symbole definiert als ${H}_{max} = {log}_{2} \left(N\right) .$

Ferner wird die normalisierte Entropie, bzw. die Effizienz *η*, definiert als: $η = \frac{H}{{H}_{max}} .$

Eine weitere Möglichkeit ist die Bestimmung der worst-case entropy bzw. der Min-Entropie *H*_{*min*,} welche ein konservativeres Maß als die Shannon-Entropie ist, da ihr Wert stets kleiner ist. Im Fall eines binären Zahlenbereiches werden für jeden binären Wert 0 und 1 die Eintrittswahrscheinlichkeit *p*₀ und *p*₁ berechnet und die maximale Wahrscheinlichkeit *pₘₐₓ =* max (*p*₀, *p*₁) wird genutzt, um die Min-Entropie für eine Zufallsvariable zu berechnen: ${H}_{min} = - {log}_{2} \left({p}_{max}\right) .$

Bevorzugterweise sind die binären Werte der Sicherheitsschlüssel gleichmäßig verteilt. Wenn eine Schlüsselgenerierungsfunktion Bitfolgen ausgibt, die in Richtung 0 oder 1 verzerrt sind, wird die Gesamtentropie des Schlüssels reduziert. Dies bedeutet, dass Angreifer Muster finden und andere Schlüssel vorhersagen können.

Bevorzugterweise wird für die Bewertung der Einzigartigkeit der PUF-Response, d.h. des Sicherheitsschlüssels, eine PUF-spezifischen Sicherheitsmetrik, wie beispielsweise die Inter Hamming Distance (inter-HD) Measure herangezogen.

Dem Fachmann sind verschiedene weitere PUF-Sicherheitsmetriken bekannt, um die Qualität von PUFs zu bewerten und zu vergleichen.

Die inter harmming distance *HDᵢₙₙₑᵣ* für zwei PUF-Instanzen i und j ist definiert als ${HD}_{inter} = FHD \left({R}_{i}, {R}_{j}\right) ,$ wobei *Rᵢ* und *Rⱼ* zwei Antworten (Responses) von verschiedenen PUF-Instanzen nach dem Anwenden der gleichen Challenge darstellen und *FHD*(*X, Y*) die fraktionierte Hamming-Distanz (bzw. fractional hamming distance) zwischen zwei binären Bitstrings *X =* {*x*₀, ... *x*_{*L*-1}} und *Y =* {*y*₀*, ... y*_{*L*-1}} der gleichen Länge *L* ist, definiert als $FHD \left(X, Y\right) = \frac{1}{L} ⋅ HD \left(X, Y\right) = \frac{1}{L} ⋅ {\sum }_{l = 0}^{L - 1} {x}_{l} ⊕ {y}_{l}$ mit der hamming distance *HD.*

In einer weiteren bevorzugten Ausführungsform wird zur Erzeugung des kryptographischen Schlüssels und/oder Authentifizierung des Objekts das Messsignal die mindestens eine PUF-Mode und die Anwendungsfrequenz und/oder Anwendungsmode berücksichtigt. Durch die Nutzung einer Kombination der Anwendungsfrequenz und/oder Anwendungsmode und der PUF-Mode wird insbesondere die Entropie zusätzlich erhöht. Bevorzugterweise werden durch die Verwendung der Kombination zusätzlich intrinsische Merkmale des MEMS-PUFs extrahiert. Insbesondere wird somit der Informationsgehalt gesteigert. Besonders vorteilhaft ist neben der Anwendungsmode nur eine weitere Anregung, in der PUF-Mode, benötigt.

In einer weiteren bevorzugten Ausführungsform umfasst das MEMS-Bauteil eine schwingfähige Struktur, wobei die Anwendungsfrequenz der Eigenfrequenz der Grundmode bzw. der ersten Mode der schwingfähigen Struktur entspricht und die mindestens eine PUF-Mode einer höherfrequenten Mode der schwingfähigen Struktur entspricht. In bevorzugten Ausführungsformen ist die Eigenfrequenz der höherfrequenten PUF-Mode um einen Faktor 2, 3, 4, 5, 10 oder mehr höher als die Eigenfrequenz der Anwendungsmode. Die schwingfähige Struktur umfasst vorzugsweise eine Kammstruktur, eine Biegebalkenstruktur und/oder eine Membran.

In bisherigen Anwendungen finden höherfrequente Moden, im Vergleich zu der Grundmode, die in bevorzugten Ausführungsformen für die eigentliche Nutzung des MEMS-Bauteils, beispielsweise als Sensor, verwendet werden in der Regel keine Berücksichtigung. Insbesondere verfügen kapazitive MEMS-Strukturen, beispielsweise Kammstrukturen in Beschleunigungssensoren, neben der anwendungsrelevanten Mode bzw. der Frequenz, die zur Anregung der Anwendung genutzt wird, je Freiheitsgrad über eine weitere, bevorzugterweise höherfrequente Mode. Vorzugsweise wird durch die Berücksichtigung der höherfrequenten Moden die Entropie maßgeblich gesteigert. Besonders bevorzugt umfasst das MEMS-Bauteil eine schwingfähige Kammstruktur, wobei die Anwendungsmode eine Grundmode der schwingfähigen Kammstruktur ist und die PUF-Mode eine Fingermode, eine Federmode und/oder eine Überlagerung aus Finger- und Federmode ist.

In einer besonders bevorzugten Ausführungsform ist das MEMS-Bauteil ein Beschleunigungssensor. Ein Beschleunigungssensor ist vorzugsweise ein piezoelektrischer oder kapazitiver Sensor. In der Regel geben Beschleunigungssensoren eine Spannung bzw. eine Spannungsänderung, welche sich proportional zu einer Beschleunigung in Achsenrichtung verhält. Bevorzugterweise umfassen MEMS-Beschleunigungssensoren kammförmige Strukturen, die üblicherweise Silizium umfassen. Bevorzugterweise umfassen diese Kammstrukturen bewegliche und feste Elektroden, welche in einer ineinandergreifenden Anordnung konstruiert sind. In der Regel erfährt die bewegliche Elektrode im Fall einer Beschleunigung eine relative Verschiebung der festen Elektrode und diese Verschiebung bewirkt vorzugsweise eine Veränderung der Kapazität zwischen den Elektroden. Bevorzugterweise wird diese Veränderung gemessen und in eine Spannung umgewandelt.

In bevorzugten Ausführungsformen ist das MEMS-Bauteil ein einachsiger kapazitiver Beschleunigungssensor, wobei die Kammstruktur in eine Richtung auslenkbar ist.

In weiteren bevorzugten Ausführungsformen ist das MEMS-Bauteil ein mehrachsiger kapazitiver Beschleunigungssensor umfassend zwei oder mehr Kammstrukturen, welche in zwei oder mehr Richtung auslenkbar sind.

Eine Kammstruktur ist bevorzugt eine Struktur, die mehrere Kammfinger aufweist, die bevorzugt regelmäßig angeordnet sind, d. h. insbesondere, dass die Kammfinger hinsichtlich Form, Länge, Breite und Dicke im Wesentlichen identisch sind. Die Kammstruktur umfasst bevorzugt auch Leerbereiche. Ein Leerbereich bezeichnet bevorzugt einen Bereich der Kammstruktur, an dem das Material der Kammstruktur nicht vorhanden ist. Bevorzugt umfasst eine Kammstruktur eine regelmäßige abwechselnde Folge von einem Kammfinger und einem Leerbereich. Üblicherweise wird eine Kammstruktur durch gängige Methoden der Halbleiter- Mikrosystemtechnik bereitgestellt werden, beispielweise durch die Ätzung eines Substrats. Insbesondere treten bei der Herstellung Abweichungen in festen Toleranzbereichen auf, welche die intrinsischen Eigenschaften eines MEMS-Bauteils definieren.

Die Kammfinger bzw. Finger sind in der Regel so gestaltet, dass sie mechanische, elektrische oder optische Wechselwirkungen ermöglichen, wie zum Beispiel die Änderung der Kapazität bei sich relativ zueinander bewegenden Fingern oder die Umwandlung von äußeren Kräften in messbare Signale. Die Kammstruktur kann in verschiedenen Anwendungen wie Sensoren, Aktuatoren oder Schaltern verwendet werden und wird typischerweise mittels Mikrofertigungstechniken wie Fotolithografie und Ätzen hergestellt. Eine Fingermode bezieht sich insbesondere auf eine Schwingungsmode, bei der sich die Fingerstrukturen eines MEMS-Bauteils als Antwort auf eine Anregung bewegen. In einer Fingermode bewegen sich die Finger einer beweglichen Masse bevorzugterweise parallel zueinander oder in einem ähnlichen Muster relativ zu den festen Elektroden. Dies führt bevorzugt in der Regel zu einer charakteristischen Resonanzfrequenz.

Bevorzugterweise wird in einem Beschleunigungssensor eine bewegliche Masse, bevorzugterweise umfassend eine Kammstruktur, mittels elastischer Federn in einem festen Rahmen befestigt. Dabei wirken die Federn zwischen der Masse und einem festen Punkt. Eine Federmode beschreiben bevorzugt eine Auslenkung bzw. Schwingung der Federstruktur, welche als elastisches Element wirkt. Federn bzw. Federstrukturen. Insbesondere sind Finger- und/oder Federmoden vorteilhaft zur Identifikation der intrinsischen eindeutigen Eigenschaften eines MEMS-Bauteils, da ihre Resonanzfrequenzen bevorzugterweise einzigartig sind.

In einer bevorzugten Ausführungsform umfasst das MEMS-Bauteil einen Beschleunigungssensor umfassend eine Kammstruktur. Vorzugsweise umfasst die Kammstruktur mehr als 5 (Kamm-) Finger, besonders bevorzugterweise mehr als 100 (Kamm-)Finger und ganz bevorzugterweise mehr als 1000 (Kamm-)finger. Bevorzugterweise ist ein Finger 10 - 1000 *µm*, besonders bevorzugterweise 50 - 600 *µm*, ganz besonders bevorzugterweise 100 - 40*µm* lang.

In einer weiteren bevorzugten Ausführungsform ist die Anwendungsmode des MEMS-Bauteils eine in-plane Mode und die mindestens eine PUF-Mode eine out-of-plane Mode.

Eine "in-plane Mode" (Bewegung in der Ebene) beschreibt vorzugsweise eine Bewegung beweglicher Abschnitte des MEMS-Bauteils, vorzugsweise einer schwingfähigen Struktur, bei der die Bewegung in einer Ebene, wie etwa der horizontalen x-y-Ebene, stattfindet. Dabei bewegen sich die beweglichen Abschnitte, vorzugsweise Teile der schwingfähigen Struktur, entlang der x- und y-Richtungen, wobei diese Bewegungen als unabhängig voneinander betrachtet werden können. Es können somit zwei getrennte, eindimensionale Bewegungen entstehen, die in senkrecht zueinanderstehenden Richtungen erfolgen, was zu einer Schwingung innerhalb dieser Ebene führt. Im Gegensatz dazu bezeichnet eine "out-of-plane" Mode eine Bewegung entlang der vertikale z-Richtung, also senkrecht zur x-y-Ebene. Diese Art der Bewegung ist orthogonal zur in-plane Bewegung und beschreibt eine Verschiebung, die aus der Ebene heraus erfolgt.

Eine Kammstruktur, zum Beispiel in einem MEMS-Beschleunigungssensoren, die derart angeregt wird, dass die bewegliche Elektrode eine relative Verschiebung der festen Struktur erfährt, führt eine in-plane Bewegung aus und schwingt daher bevorzugt in einer in-plane Mode. Insbesondere können diese Schwingungen genutzt werden, um Änderungen der Kapazität oder von Widerständen zu messen. Eine out-of-plane Mode einer Kammstruktur kann beispielsweise durch eine asymmetrische Feldverteilung zwischen den Elektroden entstehen. Darüber hinaus können Höhenunterschiede in der Kammstruktur, welche üblicherweise, während dem Herstellungsprozess innerhalb von Fertigungstoleranzen entstehen, zu out-of-plane Bewegungen in der z-Richtung führen. Vorteilhaft sind die out-of-plane Bewegungen durch eine erhöhte Entropie gekennzeichnet, sodass sich diese in besonderem Maße für die Nutzung als MEMS-PUF eignen.

In einer bevorzugten Ausführungsform ist das MEMS-Bauteil ein kapazitives MEMS-Bauteil. Bevorzugterweise messen kapazitive MEMS-Sensoren physikalische Parameter, indem sie die Kapazität zwischen einer festen und einer beweglichen Platte messen. Dabei wird insbesondere genutzt, dass sich die Kapazität zwischen den Elektroden bzw. Platten ändert, wenn die bewegliche Platte in Bewegung versetzt wird, beispielsweise vibriert. Dies wird bevorzugt durch das Anlegen einer Wechselspannung und/oder das Messen der Ausgangsspannung erfasst. Kapazitive MEMS-Sensoren sind besonderes bevorzugt und zeichnen sich durch eine hohe Sensibilität, einen geringen Stromverbrauch, ein einfaches Design und eine geringe Temperaturabhängigkeit aus. Insbesondere werden kapazitive MEMS als Inertialsensoren mit geeigneten feder-Masse-Dämpfern-Systemen eingesetzt. Bevorzugterweise umfassen kapazitive MEMS-Strukturen, wie beispielsweise Kammstrukturen in Beschleunigungssensoren, neben der anwendungsrelevanten Mode je Freiheitsgrad, über weiter, bevorzugt höherfrequente, Moden, die jedoch für die eigentliche Anwendungsfunktion als Sensor in der Regel keine Berücksichtigung finden.

In einer weiteren bevorzugten Ausführungsform ist das MEMS-Bauteil ein piezoelektrische MEMS-Bauteil. Diese werden häufig in der Inertialsensorik, für Druckmessungen und zur Energiegewinnung verwendet. Piezoelektrische MEMS-Resonatoren finden sich bevorzugt in der Flüssigkeitsdichte- und Geschwindigkeitssensorik, sowie bei der Messung von Gasdruck. Hierzu wird insbesondere der piezoelektrische Effekt genutzt, wonach bestimmte Materialien elektrische Spannung in mechanische Spannung umwandeln. In der Regel wird ein dünner piezoelektrischer Materialstreifen zwischen zwei Elektroden durch Anlegen einer Spannung in Schwingung versetzt. Das Anregungssignal und Messignal im Falle eines piezoelektrische MEMS-Bauteil ist vorzugsweise elektrisch. Insbesondere haben piezoelektrische MEMS-Strukturen, beispielsweise auf Basis von Biegebalkenstrukturen, den Vorteil, dass viele Moden (insbesondere auch Nicht-Anwendungsmoden) gemessen werden können, die sich als Entropiequelle eignen.

In einer weiteren bevorzugten Ausführungsformen ist das MEMS-Bauteil ein piezoresistives Bauteil, bevorzugt ein piezoresistiver Sensor. Diese können beispielsweise zur Messung eines Luftdrucks, einer Gasströmung und zur Viruserkennung im Gesundheitswesen sowie in der Luftqualitätssensorik und in gasempfindlichen Sensoren verwendet. Hierbei wird insbesondere der piezoresistiven Effekt genutzt, wonach sich der Widerstand von piezoresistiven Materialien infolge von elastischen Verformungen ändert. Diese Widerstandsänderung wird vorzugsweise in eine Spannung umgewandelt.

Bevorzugterweise sind weitere anwendungsrelevante MEMS-Bauteile ausgewählt aus einer Gruppe umfassend Beschleunigungssensoren, Gyroskope, Oszillatoren, Lautsprecher, Lorentzkraftmagnetometer, Mikrophone, membranbasierte Drucksensoren, Cantilever-basierte Bio-, Chemie-, Gaseigenschaften-, Dichte-Sensoren, Cantilever Array Sensoren, ohne auf die vorgehende Auswahl beschränkt zu sein.

Bevorzugterweise nutzen Sensoren schwingungsfähigen Strukturen, wie beispielsweise membranbasierten Drucksensoren oder Cantilever-basierten Sensoren zur Messung von Bio-, Chemie-, Gaseigenschaften und Dichte. In der Regel ist es dabei möglich die Eigenfrequenzen der höheren Moden auf Grundlage der bekannten Grundmode vorherzusagen. Beispielsweise ist bei einem Cantilever die Anwendungsmode die Grundmode bzw. die sogenannte erste Mode. Üblicherweise ist eine weitere Mode bzw. eine PUF-Mode eine höhere Biegemode. Insbesondere treten bei den höheren Biegemoden zusätzliche Biegemoden auf, die in der Regel komplexer sind und mehrere Schwingungsmoden entlang des Cantilevers aufweisen. Dabei hat jede weitere Mode eine höhere Eigenfrequenz als die vorherige. In weiteren bevorzugten Ausführungsformen werden mehrachsigen Sensoren verwendet, wodurch Messungen in unterschiedliche Richtungen ermöglicht werden. Für mehrachsige Sensoren wird in der Regel insbesondere ein komplexeres Messignal erhalten, wodurch die Entropie des MEMS-Bauteils üblicherweise vorteilhaft erhöht werden kann. Insbesondere haben Lorentzkraftmagnetometer, Oszillatoren, Lautsprecher, Cantilever array sensors in der Regel mehrere Anwendungsmoden. Bevorzugterweise ist eine PUF-Mode höherfrequenter als eine Anwendungsmode, besonders bevorzugt ist eine PUF-Mode höher als sämtliche Anwendungsmoden des MEMS-Bauteils.

In bevorzugten Ausführungsformen werden magnetische Anregungsverfahren verwendet, wie sie beispielsweise bei Lorentzkraftmagnetometern zum Einsatz kommen (externes Magnetfeld und Strom im Sensor). In weiteren bevorzugten Ausführungsformen können mechanische Anregungssignale, vorzugsweise generiert mittels einer externen Anregungseinheit wie beispielsweise durch einen Shaker oder Piezoplättchen, genutzt werden. Bevorzugterweise wird eine mechanische Anregung mittels einer Recheneinheit ausgelöst und durch ein Anregungssignal an das MEMS-Bauteil übertragen. In weiteren bevorzugten Ausführungsformen ist eine akustische Anregung durch ein Mikrofon möglich. Bevorzugterweise kann ein Anregungssignal auch eine Einspeisung eines externen elektrischen Anregungssignales umfassen. Insbesondere können externe Anregungen eines Anregungssignales eine Hochspannung (HS) oder eine Hochfrequenz (HF) aufweisen. In bevorzugten Ausführungsformen kann ein Messignal, beispielsweise eines Cantilevers, mittels eines Laservibrometers erfasst werden, wobei dieses beispielsweise ein thermisch-mechanisches Rauschen bei einer optisch zugänglichen Cantilever-Struktur sein kann.

In bevorzugten Ausführungsformen kann die Erfassung eines Messsignales elektrisch, beispielsweise durch Strukturen mit kapazitiven, piezoelektrischen, piezoresistiven und/oder magnetischen Schnittstellen bzw. Kommunikationsschnittstellen erfolgen. Bei der Kommunikationsschnittstelle kann es sich um eine standardisierte Schnittstelle zum Austausch von Daten, wie beispielsweise Bluetooth, Lightning, USB, WLAN etc. handeln. Es kann sich jedoch auch um eine individuell für das System entwickelte Schnittstelle handeln. Die Schnittstelle kann drahtlos oder kabelgebunden sein. In weiteren bevorzugten Ausführungsformen, insbesondere bei offenen Strukturen, erfolgt die Auswertung optisch, z.B. mittels eines Laservibrometers und/oder einem holographischen Mikroskop.

In einer weiteren bevorzugten Ausführungsform ist das MEMS-Bauteil ein MEMS-Aktor, ein MEMS-Sensor und/oder ein MEMS-Filter Besonders bevorzugt ist das MEMS-Bauteil ein Beschleunigungssensor und/oder ein Gyroskop.

Im Sinne der Erfindung basiert ein MEMS-Sensor bevorzugterweise auf einer mikroskaligen mechanischen Strukturen, die mit elektronischen Komponenten kombiniert ist. Diese Sensoren messen bevorzugterweise physikalische Größen wie Druck, Temperatur, Beschleunigung oder Feuchtigkeit und wandeln diese in elektrische Signale um. Insbesondere sind MEMS-basierte Sensoren in vielen Anwendungen wie Smartphones und in medizinischen Geräten zu finden.

Im Sinne der Erfindung ist ein MEMS-Aktor bevorzugterweise ein mikroskaliges Gerät, das mechanische Bewegungen erzeugt, indem es elektrische Signale in mechanische Arbeit umwandelt. Beispielsweise werden MEMS-Aktoren in Anwendungen wie der präzisen Bewegungssteuerungen, Drucksystemen oder in optischen Systemen eingesetzt.

Bevorzugterweise weisen MEMS-Gyroskope eine komplexe Struktur auf und umfassend eine Mehrzahl an mechanischen und elektrischen Eigenschaften. Insbesondere sind Gyroskope in der Regel Sensoren zur Messung einer Drehrate umfassend eine Kombination von einem oder mehreren schwingenden Feder-Masse-Systemen. Dabei umfassen grundlegende mechanische Parameter die Resonanzfrequenzen des MEMS-Gyroskope, wobei es aufgrund der komplexen Struktur Vielzahl an Frequenzmoden und somit insbesondere eine Vielzahl an PUF-Moden gibt. Darüber hinaus liefern Quadratursignale ein Maß für die Symmetrien der Sensorstruktur, welche insbesondere sensitiv für kleinste Schwankungen z.B. in den Federn, Massen oder Elektrodenabständen sind, und sich daher gut für die Extraktion der Entropie des MEMS-Bauteils eigenen. Der Aufbau eines Gyroskops umfasst bevorzugterweise zwei (gekoppelte) Resonatoren, wobei der primäre Resonator in Resonanz und der sekundäre Resonator resonant oder offresonant betrieben werden.

Bevorzugterweise umfassen MEMS- Beschleunigungssensor eine Kammstruktur, wobei sich die herstellungsbedingten Toleranzen z.B. in der Dicke, Länge und in materialspezifischen Parametern, welche das MEMS-Bauteil einzigartig machen, insbesondere durch eine geeignete Anregung mittels eines Anregungssignales umfassend eine PUF-Mode in dem Messignal widerspiegeln. Dabei sind insbesondere höherfrequente Moden als PUF-Mode besonders geeignet, um die Entropie des MEMS-Bauteils als PUF vorteilhaft zu erhöhen.

In einer bevorzugten Ausführungsform umfasst der Aufbau eines Beschleunigungssensors einen Resonator, wobei sowohl ein off-resonanter Betrieb (mit einer Anregung umfassend eine obere Eckfrequenz des Signalbandes, die wesentlich kleiner ist als die Resonanzfrequenz), als auch ein resonanter Betrieb (Anregung in Resonanz bspw. mittels PLL (Phase-Locked Loop) und Detektion der Resonanzverschiebung aufgrund von externer Beschleunigung) möglich ist. Entsprechend kann die Frequenz, die zur Anregung der Anwendung des MEMS-Bauteils bzw. des Beschleunigungssensors geeignet ist, sowohl im Wesentlichen gleich der Eigenfrequenz einer Mode des MEMS-Bauteils oder verschieden von der Eigenfrequenz der Moden sein.

In einer weiteren bevorzugten Ausführungsform umfasst das MEMS-Bauteil einen MEMS-Filter. Bevorzugterweise ist der MEMS-Filter ausgewählt aus einer Gruppe umfassend SAW- und BAW-Filter. Insbesondere nutzen SAW (surface acoustic wave) und BAW (buld acoustic wave) Filter akustische Wellen. Eine Anwendungsmode entspricht einer Filtermode des MEMS-Filters. Eine Filtermode bezeichnet den Modus, in dem akustische Wellen (Oberflächenwellen bei SAW und Volumenwellen bei BAW) durch das Material bewegt werden.

Insbesondere wird durch diesen Modus in der Regel bestimmt, wie die Wellen im Filter interagieren und welche Frequenzen sie durchlassen oder blockieren. Bevorzugterweise basieren SAW-Filter auf der Ausbreitung von Rayleigh-Wellen auf einer Oberfläche eines piezoelektrischen Materials. Bevorzugterweise werden diese Wellen durch Elektroden auf der Oberfläche des Materials angeregt und beispielsweise zur Signalverarbeitung in Kommunikationssystemen oder Sensoren genutzt. Bevorzugterweise basieren BAW-Filtern auf der Ausbreitung von Wellen innerhalb eines Volumens eines Materials. Dazu werden insbesondere Shear Horizontal-Wellen (SH-Wellen) oder Lamb-Wellen angewandt. Diese Filter nutzen die BAW-Technologie, bei der akustische Wellen durch das gesamte Material laufen und typischerweise in Mikrosystemen mit höherer Frequenz und kleinerer Größe verwendet werden. Zusätzlich können in bevorzugten Ausführungsformen Love-Wellen in mehrschichtigen Strukturen eingesetzt werden, bei denen die akustischen Wellen hauptsächlich in der obersten Schicht propagieren, und sowohl in SAW- als auch in BAW-Systemen zur Verbesserung der Sensitivität oder Filterleistung genutzt werden.

Besonders bevorzugt für die Anwendung als PUF sind MEMS-SAW oder MEMS-BAW Filter ab einer Frequenz von 100 MHz, da bei höheren Frequenzen die Filtertechnik zwar zunehmend schwieriger wird, aber dieser Frequenzbereich dennoch eine hohe Frequenzstabilität und Präzision bietet, die für bestimmte Anwendungen, wie etwa Kommunikationssysteme oder hochpräzise Sensoren, erforderlich sind. Insbesondere ist eine hohe Güte mit Elektronik dann äußerst schwierig zu realisieren. Insbesondere beschreibt die Güte (Q-Faktor) das Verhältnis zwischen der gespeicherten und verlorenen Energie in einem System - je höher der Q-Faktor, desto weniger Energie geht verloren und desto präziser ist das Frequenzspektrum eines Filters. Insbesondere wird die SAW-Technologie in bevorzugten Ausführungsformen auch für die Implementierung von Sensoren verwendet.

Bevorzugt ist der Abstand zwischen der Grundmode bzw. der Anwendungsmode eines MEMS-Filters und der Mode erster Ordnung einer Love-Welle geringer ist als die Anwendungsmode. Durch das nahe aneinander liegen der Moden ist eine feine Abstimmung und eine genauere Messung von Resonanzfrequenzen möglich.

In der bevorzugten Ausführungsformen eines Beschleunigungssensoren hingegen beträgt der Frequenzabstand zwischen einer weiteren Mode bzw. einer PUF-Mode und der Anwendungsmode üblicherweise ein Vielfaches der Frequenz der Anwendungsmode, beispielsweise ein Faktor 2, 3, 5, 10 oder mehr. Dieser größere Frequenzabstand kann vorteilhaft eine robustere Unterscheidung zwischen den verschiedenen Moden ermöglichen und außerdem eine höhere Stabilität bei der Anwendung sichern.

In einer weiteren bevorzugten Ausführungsform werden physikalische Eigenschaften des MEMS-Bauteils während des Herstellungsprozesses festgelegt und liegen als Zufallsgrößen in einem bekannten Toleranzbereich für den Herstellungsprozess. In der Regel werden für den Fertigungsprozess von MEMS-Bauteilen Toleranzbereiche für bestimmte physikalische, geometrische oder materialspezifische Eigenschaften festgelegt. In Bezug auf schwingfähige Strukturen, wie Cantilever oder Kammstrukturen, handelt es sich bei den physikalischen Eigenschaften, durch die sich zwei MEMS-Bauteile bzw. zwei PUF-Elemente unterscheiden beispielsweise um eine Ausdehnung, Dicke oder Steifigkeit der schwingfähigen Elemente. Bei Cantilevern bzw. Biegebalken oder Membranen betreffen die abweichenden physikalischen Größen beispielsweise die Schichtdicke. Insbesondere umfassen herstellungsprozessbedingten Schwankungen beispielsweise Aufweitungsfehler (Trench error), Dickenabweichung der funktionellen Schicht (Thickness deviation of device layer), abgeschrägte (Ober-)Kanten der Seitenwände (Chanfered edges of sidewalls), sich verjüngende/aufweitende Seitenwände (Tapered sidewalls), Schräge Seitenwände (Tilted sidewalls), Einkerbungen (Notching) und weitere. Der Toleranzbereich der herstellungsbedingten Abweichungen ist bevorzugterweise auf 15 % oder weniger, besonders bevorzugt auf 10% oder weniger festgelegt.

In einer bevorzugten Ausführungsformen ist das Anregungssignal eine Challenge und das Messignal bei der mindestens einen PUF-Mode eine Response. Eine Challenge bzw. Eingabe wird mittels dem MEMS-Bauteil, insbesondere basierend auf den intrinsischen einzigartigen Eigenschaften, auf eine Response bzw. Ausgabe gemappt. Dabei sollte die Response auf ein und dieselbe Challenge angewandt auf ein und dasselbe MEMS-Bauteil im Wesentlichen dieselbe sein. Die Response auf ein und dieselbe Challenge auf zwei verschiedene MEMS-Bauteile sollte sich hingegen hinreichend unterscheiden.

Die Challenge ist vorzugsweise ein (Anregungs-)Signal, vorzugsweise ein elektrisches Signal, wobei es besonders bevorzugt ist, ein oder mehrere periodischen Signale mit vorbestimmten Anregungsfrequenzen als Challenge zu verwenden. Die Response kann ebenfalls in Form einer oder mehrerer elektrischer (Mess-)Signale erfolgen. Die Amplitude und/oder Phasenverschiebung der Response für eine Challenge sind abhängig von den physikalischen Eigenschaften des MEMS-Bauteils. Es kann auch bevorzugt sein, dass die Response in Form von Messdaten beispielsweise über ein mechanische Schwingverhalten des MEMS-Bauteils nach einer Anregung ausgelesen wird.

In bevorzugten Ausführungsformen ist das Messignal eine Response. In weiteren bevorzugten Ausführungsformen wird das Messignal zu einer Response weiterverarbeitet. Insbesondere wird vorzugsweise mittels einer Quantifizierung aus einem analogen Messignal eine binäre Zeichenfolge abgeleitet, welche als Response bzw. kryptografischer Schlüssel dient.

In bevorzugten Ausführungsformen ist das Anregungssignal eine Schwingungsanregung in Form eines elektrischen Signales die Challenge und die zugehörige Schwindungsantwort bzw. das Messignal die Response. In der Regel ist die exakte Schwingungsantwort bzw. das charakteristische Resonanzspektrum eines MEMS-Bauteils selbst unter Kenntnis der Prozessparameter nicht ohne Weiteres vorhersagbar. So kann beispielsweise eine einfach zu beschreibende, periodische Krafteinwirkung entlang einer Richtung auch wesentlich komplexere Schwingungsmuster erzeugen, welche von den exakten physikalischen Prozessparameter abhängt. Vorteilhafterweise ist es daher üblicherweise sehr schwierig eine Response aus einer Challenge vorherzusagen.

In weiteren bevorzugten Ausführungsformen umfasst die Erzeugung des kryptografischen Schlüssels und/oder die Authentifizierung/Identifizierung des Objektes ein Quantisierungsverfahren, wodurch bevorzugt aus analogen Messwerten des Messignales eine binäre Zeichenfolge abgeleitet wird, welche als kryptografischer Schlüssel dient. In der Regel handelt es sich bei den Messdaten um analoge Signale. Sicherheitsfunktionen wie kryptografischen Schlüssen und die Identifizierung und/oder Authentifizierung eines Objektes basieren auf binären Zeichenfolgen. Daher ist in bevorzugten Ausführungsformen eine Verarbeitung von den Messignalen nötig, um eine Response bzw. einen kryptografischen Schlüssel zu erhalten.

In einer weiteren bevorzugten Ausführungsform der Erfindung, wird vor der Erzeugung des kryptographischen Schlüssels und/oder der Identifizierung/Authentifizierung des Objekts eine Fehlerkorrektur sowie eine Normalisierung des Messignals aus Verfahrensschritt c) vorgenommen. Insbesondere werden systematische Schwankungen, die nicht zu zufälligen Herstellungsschwankungen beitragen, abgeschwächt oder vollumfänglich eliminiert. Besonders bevorzugt werden für die Fehlerkorrektur, die Normalisierung und das Abschwächen bzw. Eliminieren von nicht zufälligen Fehler Methoden ausgewählt aus einer Gruppe umfassend Fehlerfilterung, Vorverarbeitung (Entropie-Destillation), Ausreißer-Filterung, Normalisierung, Quantilberechnung genutzt. Bevorzugterweise werden die Messdaten derart ausgewertet, dass systematische Schwankungen mittels einer Entropie-Destillation erkannt und modelliert werden können.

Insbesondere werden in diesem Schritt bevorzugterweise die Modellkoeffizienten der systematischen Schwankungen generiert, welche gespeichert und vorzugsweise für die Schlüsselgenerierung genutzt werden. Eine Quantilberechnung bezeichnet vorzugsweise eine statistische Methode und ist geeignet, um eine Verteilung von Daten in gleich große Teile zu unterteilen. Dadurch ermöglicht sie bestimmte Schwellenwerte innerhalb einer Datenreihe zu identifizieren. Insbesondere kann diese Methode bevorzugterweise dazu dienen, die Stabilität von Messwerten zu beurteilen und Ausreißer zu identifizieren. Somit wird bevorzugterweise eine Ausreißer-Filterung ermöglicht. Eine Normalisierung bezeichnet üblicherweise eine Methode, um Daten auf einen bestimmten Bereich oder eine bestimmte Skala zu transformieren. Dadurch wird insbesondere eine Skalierung der physikalischen Eigenschaften ermöglicht, wodurch Werte verglichen werden können, was vorzugsweise die Codierung eines sicheren Schlüssels ermöglicht. Darüber hinaus erlaubt eine Normalisierung vorzugsweise eine Reduktion von Verzerrungen, derart dass die Schlüsselgenerierung nicht von einzelnen (besonders hohen oder niedrigen) Messwerten dominiert wird.

In bevorzugten Ausführungsformen werden die bereinigten Messdaten gruppiert und Partitions- und Hilfsdaten erzeugt und in Schlüsselgenerierungsphase werden die Elemente jeder Untergruppe nach ihren Werten geordnet, bevor das Positioning Syndrome Coding (PSC)-Kodierungsverfahren auf die Permutation angewendet wird, um den geheimen Schlüssel zu erzeugen.

Begriffe wie im Wesentlichen, ungefähr, etwa, ca. etc. beschreiben bevorzugt einen Toleranzbereich von weniger als ± 20%, bevorzugt weniger als ± 10%, besonders bevorzugt weniger als ± 5 %, noch stärker bevorzugt weniger als ± 3% und insbesondere weniger als ± 1%. Ähnlich beschreibt bevorzugt Größen, die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

In einem weiteren Aspekt betrifft die Erfindung ein System zur Erzeugung eines kryptografischen Schlüssels und/oder zur Identifizierung/Authentifizierung von Objekten auf Basis einer physisch unklonierbaren Funktion (PUF) umfassend
a) ein MEMS-Bauteil, wobei das MEMS-Bauteil als PUF dient,
b) eine Recheneinheit, welche mit dem MEMS-Bauteil verbunden ist und dazu konfiguriert ist, ein Anregungssignal an das MEMS-Bauteil zu senden und/oder ein Messsignal von dem MEMS-Bauteil zu empfangen,
wobei das Anregungssignal mindestens eine PUF-Mode umfasst, wobei sich die Eigenfrequenz der mindestens einen PUF-Mode von einer Anwendungsfrequenz zur Anregung des MEMS-Bauteil in dessen Anwendung unterscheidet und wobei das empfangene Messignal die mindestens eine PUF-Mode umfasst, und wobei die Recheneinheit ferner dazu konfiguriert ist, den kryptographischen Schlüssel zu erzeugen und/oder die Identifizierung / Authentifizierung des Objekts unter Berücksichtigung der mindestens einen PUF-Mode vorzunehmen.

In bevorzugten Ausführungsformen wird eine Anregung mittels eines Anregungssignals, welches eine Eigenfrequenz mindestens einer PUF-Mode umfasst, und/oder das Messen einer entsprechenden Antwort, durch eine interne Anregungseinheit und/oder eine interne Ausleseeinheit durchgeführt, insbesondere in einem built-in System. Beispielsweise kann eine Anregung über eine Feedback Schleife des geregelten Sensors erfolgen, welche durch die Recheneinheit gesteuert werde kann. Zur Auslesung kann vorzugsweise ein Signalabgriff und eine Signalverarbeitung on-chip durchgeführt werden. Bevorzugterweise wird für die Auslesung eines Messignals ein Signalabgriff on-chip und eine Signalverarbeitung mittels einer externe Verarbeitungseinheit durchgeführt. Beispielsweise kann ein breitbandiges analoges Messignal mittels Anti-Aliasing-Filter erfasst und mittels einer AD-Wandlung beispielsweise über zuschaltbare Monitor-Ports nach außen geleitetet werden und extern weiterverarbeitet bzw. der kryptografische Schlüssel codiert werden.

In bevorzugten Ausführungsformen wird eine Anregung mittels Anregungssignal, welches eine Eigenfrequenz einer PUF-Mode umfasst, die sich von der Anregungsfrequenz, die zur Anregung des MEMS-Bauteils in seiner Anwendung geeignet ist, unterscheidet, durch eine externe Anregungseinheit und/oder eine externe Ausleseeinheit durchgeführt, insbesondere in einem built-off System. Beispielsweise ist in bevorzugten Ausführungsformen eine Anregung eines MEMS-Bauteils mittels Shaker oder Piezoplättchen möglich, wobei die Recheneinheit vorzugsweise eine Schnittstelle bzw. eine Kommunikationsschnittstelle darstellt. In weiteren bevorzugten Ausführungsformen ist eine Einspeisung eines externen elektrischen Anregungssignales über Ports bzw. eine Kommunikationsschnittstelle bspw. in Form der Recheneinheit möglich. Bevorzugterweise ist eine externe Auslesung z.B. mittels Laservibrometer möglich. In bevorzugten Ausführungsformen werden interne und zwischengeschaltete externe Anregungs- bzw. Erfassungsoptionen kombiniert. In besonders bevorzugten Ausführungsformen werden die Erfassung und die Anregung durch die gleiche Einheit gesteuert.

In einem weiteren Aspekt betrifft die Erfindung die Verwendung eines Systems umfassend ein MEMS-Bauteil als PUF und eine Recheneinheit, zur Erzeugung eines kryptographischen Schlüssels und/oder zur Identifizierung/Authentifizierung von Objekten, vorzugweise zur Feststellung der Identität eines Objektes, für einen Echtheitsnachweis, zur Überprüfung von Plagiaten, als Authentisierungsmerkmal und/oder als privater Schlüssel.

Der durchschnittliche Fachmann erkennt, dass technische Merkmale, Definitionen und Vorteile bevorzugter Ausführungsformen, welche für das erfindungsgemäßen Verfahren offenbart wurden, gleichermaßen für das System, umfassend ein MEMS-Bauteil und eine Recheneinheit gelten sowie auf die Verwendung eines Systems umfassend das MEMS-Bauteil und die Recheneinheit zur Identifizierung / Authentifizierung und/oder Feststellung der Identität eines Objektes gelten und umgekehrt.

### Detaillierte Beschreibung

Im Folgenden soll die Erfindung anhand von Beispiel näher erläutert werden, ohne auf diese beschränkt zu sein.
Fig. 1 illustriert eine bevorzugte Ausführungsform des Verfahrens ausgehend von der Anregung mittels einer Challenge bis hin zur Schlüsselgenerierung und einer Zufalls-Extraktion.
Fig. 2 zeigt eine schematische Zeichnung eines kapazitiven MEMS-Sensors.
Fig. 3 stellt ein Messignal einer bevorzugten Ausführungsform dar, umfassend eine Anwendungsmode sowie eine Finger- und Federmode.
Fig. 4 zeigt eine beispielhafte Modalanalyse gemäß dem Messignal in **Fig. 3****.**
**Fig. 5a** - **5c** zeigen Untersuchungen bzgl. der Variationen in einem Die 5a bzw. zwischen verschiedenen Dies 5c für eine Messung umfassend Anwendungs- sowie Finger- und Federmode.

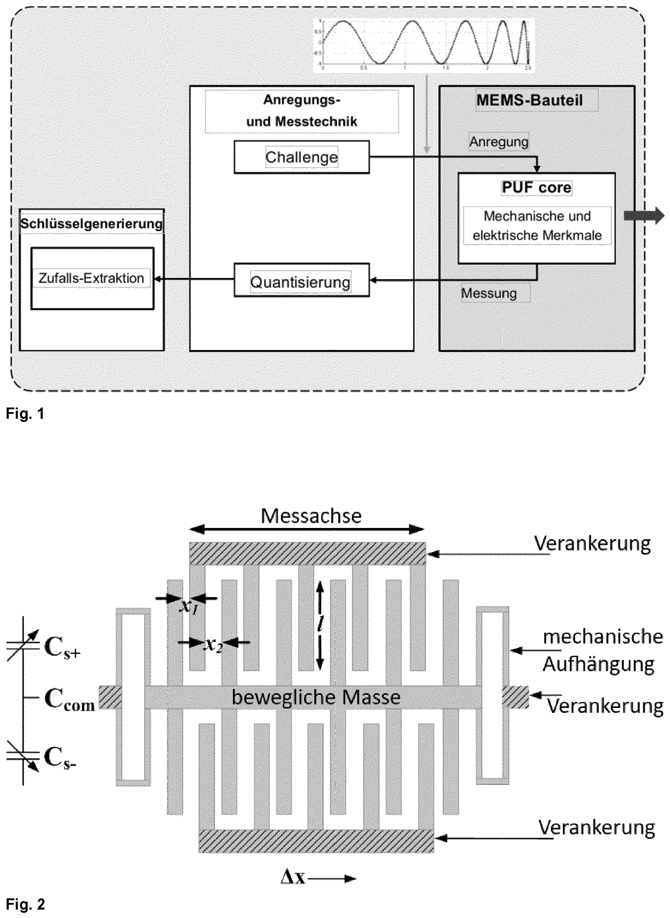

In **Fig. 1** wird ein bevorzugter chronologischer Ablauf des erfindungsgemäßen Verfahrens dargestellt. Dazu wird ausgehend von der Anregungs- und Messtechnik bzw. einer Recheneinheit eine Challenge umfassend eine PUF-Mode über eine Schnittstelle an das MEMS-Bauteil gesendet und das MEMS-Bauteil on-chip angeregt. Die Anregung wirkt auf das MEMS-Bauteil, welches als PUF dient und durch einzigartige mechanische und/oder elektrische Merkmale gekennzeichnet ist. Mittels einer Messung auf dem MEMS-Bauteil wird ein zunächst analoges Messignal erhalten, welches mittels einer Quantisierung umgewandelt wird. Anschließend wird durch eine Zufalls-Extraktion ein kryptografischer Schlüssel generiert.

In **Fig. 2** ist ein MEMS-Beschleunigungssensor darstellt umfassend eine proof mass bzw. eine bewegliche Mase mit einer Kammstruktur und Kammfingern sowie Verankerungen. Diese Struktur umfassen sowohl bewegliche als auch feste Elektroden, die in einer ineinandergreifenden Anordnung konstruiert sind. Ein Kammfinger hat im Wesentlichen die Länge *l* und der Abstand zwischen den Elektroden der Verankerung und den Kammfingen ist durch *x*₁ und *x*₂ gekennzeichnet. Im Falle einer Beschleunigung erfährt die bewegliche Elektrode eine relative Verschiebung gegenüber der festen Elektrode. Diese Verschiebung bewirkt eine Veränderung der Kapazität zwischen den Elektroden, welche gemessen und in eine Spannung umgewandelt werden kann. Die Verankerungen dienen der Befestigung bzw. Fixierung der Struktur. Insbesondere zeigt die schematische Darstellung in **Fig. 2** eine Anordnung von Fingern bzw. Kämmen. Vorzugsweise bildet jeder Finger der beweglichen Masse und der benachbarte Finger der Verankerung die Platten eines Kondensators. Die Kapazität eines solchen Kondensators hängen von dem Abstand der Platten bzw. Finger ab. Wenn sich die bewegliche Masse durch eine Beschleunigung bewegt, ändern sich diese Abstände *x*₁, *x*₂ und damit auch die Kapazitäten *C*_{*s*+} und *C*_{*s*-}. Dabei beschreibt Cₛ₊ die Kapazität zwischen den oberen Fingern der beweglichen Masse und den festen Elektroden und *C*_{*s*-} die Kapazität zwischen den unteren Fingern der beweglichen Masse und den festen Elektroden. Bei *C_{com}* handelt es sich um die gesamte bzw. gemeinsame (engl. *common*) Kapazität *C_{com}.* Ferner beschreibt Δ*x* die Auslenkung der beweglichen Masse bei einer Beschleunigung.

Der kapazitiver Beschleunigungssensor in **Fig. 2** umfasst die bewegliche Masse (proof mass), die Finger- bzw. Kammstruktur. Diese Finger bewegen sich mit der beweglichen Masse, wenn diese eine Bewegung vollführt. Die bewegliche Masse ist mit einer mechanischen Aufhängung verbunden, welche insbesondere elastische Federn umfasst, und in einem festen Rahmen befestigt ist. Die Federn wirken zwischen der beweglichen Masse und einem festen Punkt. So kann sich die Masse in eine Richtung Δ*x* (die durch eine Beschleunigung verursacht wird) bewegen. Die Federn halten die Masse in ihrer Ruhelage und bieten eine elastische Rückstellung, sodass die Bewegung der Masse begrenzt wird. Die Masse wird bevorzugt durch das Ansteuern der Elektroden angeregt, welche ausgehend von der Verankerung in **Fig. 2** ebenfalls in Form von Fingern bereitgestellt werden. Zwischen zwei Elektrodenplatten wird eine Kapazität gebildet, die von der Fläche der Elektroden und dem Abstand zwischen ihnen abhängt. Üblicherweise wird eine Veränderung der Kapazität gemessen, die umgekehrt proportional zum Abstand zwischen den Platten ist. Somit wird durch die Messung der Kapazität eine Änderung des Abstands erkannt. Dabei führt eine größere Beschleunigung zu einer stärkeren Verschiebung der Masse, was den Abstand zwischen den Platten stärker verändert und somit die Kapazität stärker variiert. Besonders vorteilhaft aus PUF sind Beschleunigungssensoren mit einer Vielzahl von Fingern, da hierbei eine besonders hohe Entropieextraktion möglich ist, da die intrinsischen Eigenschaften in diesem Fall zum einen an einer Vielzahl von Stellen auftreten und die Kapazitätsänderungen dadurch verstärkt werden. Insbesondere zeigt **Fig. 2** lediglich eine schematische Darstellung eines Beschleunigungssensor. Eine Anwendungsmode kann vorzugsweise eine Grundmode der Kammstruktur entsprechend, während eine PUF-Mode eine höherfrequente Finger-Mode oder Feder-Mode sein kann.

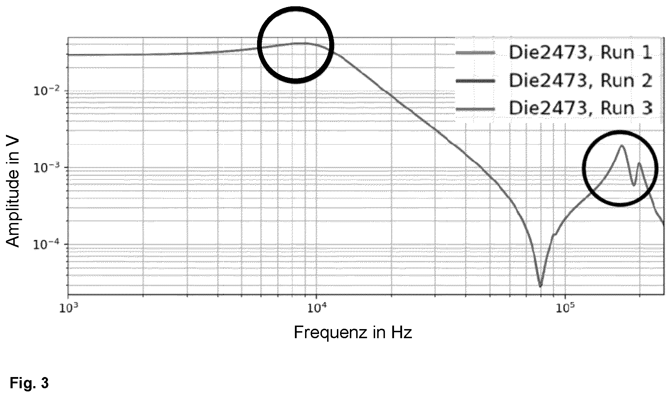

In **Fig. 3** wird ein Messignal ein und desselben MEMS-Bauteils ("Die 2473) dargestellt, wobei die gleiche Anregung und Messung drei Mal durchgeführt wurde (Run 1, 2, 3). Das MEMS-Bauteil ist ein eindimensionaler Beschleunigungssensor, welcher in eine Dimension ausgelenkt werden kann und dessen Funktionsweise durch die schematische Darstellung in **Fig. 2** erklärt ist. Insbesondere handelt es sich bei dem Bauteil um einen Kickback Chip. Durch einen ersten schwarzen Kreis ist die Messung einer Frequenz, welche zur Anwendung des MEMS-Bauteils genutzt wird, bei ca. 10⁴ Hz, markiert. Außerdem werden in einem zweiten Kreis die gemessenen Finger- und Federmoden markiert, welche bei deutlich höheren Frequenzen erkennbar sind. Insbesondere dienen die höherfrequenten Moden der Entropiesteigerung wodurch das MEMS-Bauteil als PUF besonders geeignet wird.

Fener ist eine im Wesentlichen vollständige Überlagerung der drei Messungen (Run 1, 2, 3) mit demselben "Die 2473" erkennbar, was darauf schließen lässt, dass mit ein und demselben MEMS-Bauteil für ein Anregungssignal unter gleichen Bedingungen stets im Wesentlichen das gleiche Messignal erhalten wird. Dies zeigt, dass diese wichtige Voraussetzung für eine zuverlässige PUF erfüllt wird.

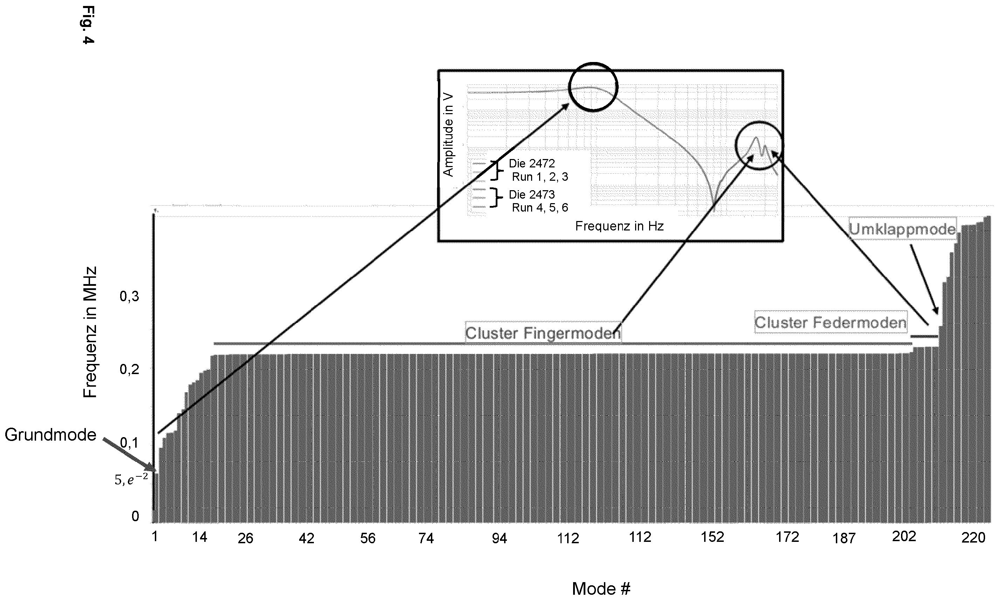

In **Fig. 4** eine Modalanalyse für Messignal ähnlich zu dem in **Fig. 3** dargestellt. Insbesondere ist die Grundmode erkennbar. Darüber hinaus ist eine Vielzahl an im Wesentlichen gleich schwingenden Fingern durch die Cluster Fingermode abgebildet. In einem noch höherfrequenten Bereich (zweiter Peak in Fig. 3) ist die Cluster Federmode dargestellt. In bevorzugten Ausführungsformen ist außerdem eine Umklappmode erkennbar.

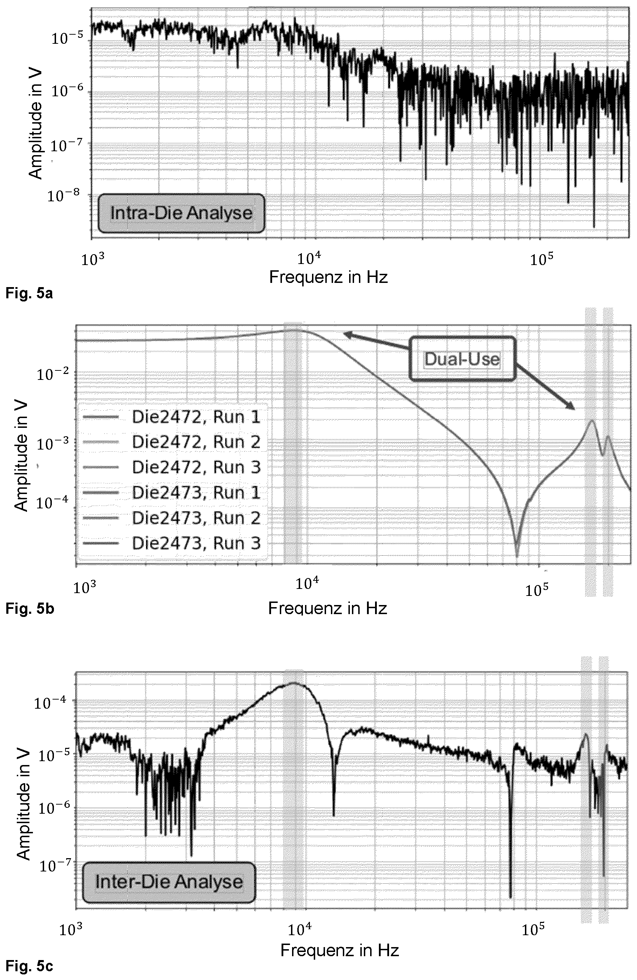

In **Fig. 5a** wird eine Intra-Die Analyse eines MEMS-Bauteils dargestellt und insbesondere die Reproduzierbarkeit getestet. Das Bauteil wird als Kickback Chip bereitgestellt. Die Abweichungen treten hier im Wesentlichen in einem Bereich von 10⁻⁸ - 10⁻⁵ auf. Hierbei wird insbesondere die Variation (gemessen im Betrag) zwischen den einzelnen Dies untersucht. Die Untersuchungen bestätigen ein verstärktes Ausmaß von Schwankungen in den Regionen rund um die charakteristischen, insbesondere überlagerten, Moden. Dies zeigt, dass die zufälligen Variationen des MEMS-Bauteils bzw. des Beschleunigungssensors sich als Entropiequelle eignen. Im Vergleich dazu wird in **Fig. 5c** eine Inter-Die Analyse gezeigt, d.h. ein Vergleich zwischen zwei verschiedenen Bauteilen ("Die 2472" und "Die 2473"), welche wieder in Form von Kickback Chips bereitgestellt sind. Dabei sind "Die 2472" und "Die 2473" auf dem Wafer direkt nebeneinander positioniert. Insbesondere weisen sie ähnliche Charakteristika auf. Die Betrachtung der Variation ist eine *worst-case* Betrachtung. Hier ist eine Abweichung in mindestens einer Größenordnung höher erkennbar (Abweichungen über 10⁻⁴. Dies zeigt, dass die intrinsischen Merkmale in der Tat durch gezielte Anregungen und Messungen extrahiert werden können. Wie in **Fig. 5b** gezeigt, treten insbesondere bei den höherfrequenten Finger- und Federmoden (im Frequenzbereich von 2*10⁵ Hz) besonders hohe Inter-Die-Schwankungen auf, sodass diese Moden sich in besonderem Maße für die Anregung der MEMS-PUF eignen. Hierzu wurde ebenso ein Kickback-Chip genutzt.

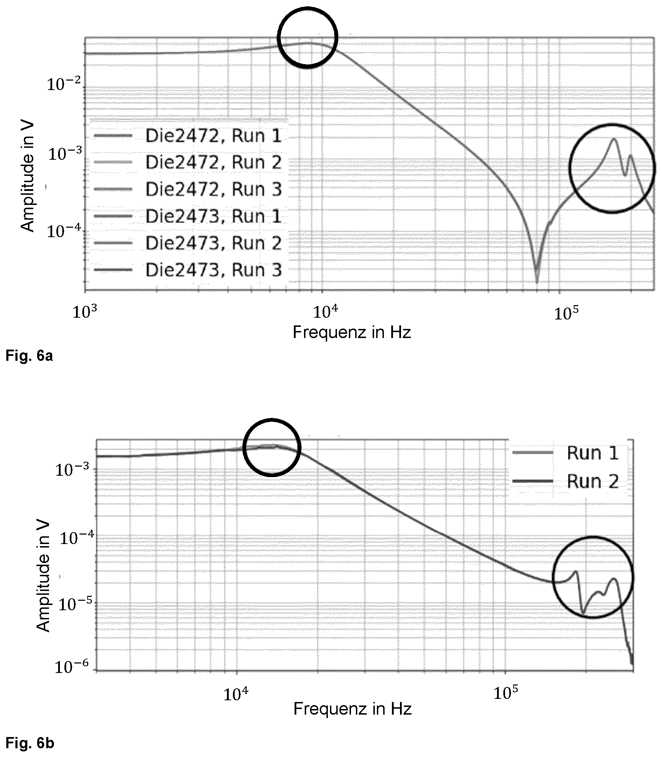

**Fig. 6a** zeigt Messungen, die mittels eines Lock-in Verstärkers durchgeführt wurden für die Bauteile "Die 2472" und "Die 2473" (Kickback-Chips). Ein Lock-in Verstärker ist ein Verstärker bevorzugt zur Messung eines schwachen elektrischen Wechselsignales. Insbesondere bestätigen die Messung die messtechnische Erfassbarkeit der überlagerten Finger- und Federmoden. Ferner wurde die Reproduzierbarkeit der Messungen experimentell nachgewiesen (Runs 1, 2, 3 jeweils für die Dies 2472, 2473). Die Messungen wurden somit für zwei verschiedene kapazitive Beschleunigungssensoren wiederholt durchgeführt (vgl. **Fig. 6a**). Die Bauteile "Die 2472" und "Die 2473 sind auf dem Wafer direkt nebeneinander angebracht, sodass sie ähnliche Charakteristika aufweisen. Die Variation ist eine *worst-case* Betrachtung. **Fig. 6b** zeigt die Messung von zwei Durchläufen der Chips, wobei MUSIK Chips als Bauteile verwendet werden. In den **Fig. 6a** und **Fig. 6b** ist jeweils mittels eines ersten schwarzen Kreises die Anwendungsmode und mittels eines zweiten schwarzen Kreises höherfrequente Nicht-Anwendungsmoden gekennzeichnet.

### Literaturverzeichnis

Abdolinezhad, S., 2024. MEMS-based physical unclonable functions. Dissertation, Universität Freiburg*.*
Becker, F.-P., 2024. VDMA Studie Industrial Security und Produktpiraterie.
Gassend, B., Clarke, D., Van Dijk, M. & Devadas, S., 2002. Silicon physical random functions.. Proceedings of the 9th ACM Conference on Computer and Communications Security (CCS), pp. p.148-160.
Geerenstein, D. v., 2020. VDMA Studie Produktpiraterie.
Lee, J. W. et al., 2004. A technique to build a secret key in integrated circuits for identification and authentication applications.. Proc. IEEE VLSI circuits Symposium, pp. 176-179.
Suh, G. E. & Devadas, S., 2007. Physical unclonable functions for device authentication and secret key generation.. In Proceedings of the 44th annual design automation conference, pp. 9-14.
Willers, O., Huth, C., Guajardo, J. & Seidel, H., 2016. MEMS gyroscopes as physical unclonable functions. In: Proceedings of the 2016 ACM SIGSAC Conference on Computer and Communications Security. s.l.:s.n., pp. 591--602.

## Patentansprüche

1. Verfahren zur Erzeugung eines kryptographischen Schlüssels und/oder zur Identifizierung/Authentifizierung eines Objekts auf Basis einer physisch unklonierbaren Funktion (PUF) umfassend folgende Schritte:
a) Bereitstellung eines MEMS-Bauteils, wobei das MEMS-Bauteil als PUF dient,
b) Anregung des MEMS-Bauteils mittels eines Anregungssignales, wobei das Anregungssignal eine Eigenfrequenz mindestens einer PUF-Mode umfasst, welche sich von einer Anwendungsfrequenz zur Anregung des MEMS-Bauteils in dessen Anwendung unterscheidet,
c) Erfassung eines Messsignales des MEMS-Bauteils, wobei das Messsignal die mindestens eine Mode umfasst,
d) Erzeugung des kryptographischen Schlüssels und/oder Identifizierung/Authentifizierung des Objekts unter Berücksichtigung des Messsignals der mindestens einen PUF-Mode.

2. Verfahren nach dem vorherigen Anspruch
**dadurch gekennzeichnet, dass**
das MEMS-Bauteil für eine Anwendung konfiguriert ist, wobei eine Ausführung der Anwendung des MEMS-Bauteils bei der Anwendungsfrequenz erfolgt, wobei vorzugsweise eine Ausführung der Anwendung des MEMS-Bauteils unter Ausnutzung einer Anwendungsmode erfolgt, während die Anregung mit der Anwendungsfrequenz in einem Frequenzband nahe oder abseits einer Eigenfrequenz der Anwendungsmode liegen kann.

3. Verfahren nach einem oder mehreren der vorherigen Ansprüche
**dadurch gekennzeichnet, dass**
das MEMS-Bauteil eine schwingfähige Struktur umfasst, wobei vorzugsweise in einer Anwendung des MEMS-Bauteiles als MEMS-Sensor und/oder MEMS-Aktuator eine Messung und/oder Anregung der schwingfähigen Struktur bei einer Anwendungsmode erfolgt.

4. Verfahren nach einem oder mehreren der vorherigen Ansprüche,
**dadurch gekennzeichnet, dass**
das MEMS-Bauteil eine Dual-use Funktionalität aufweist, wobei das MEMS-Bauteil in einem Anwendungsmodus für eine Anwendung und in einem PUF-Modus zur Erzeugung des kryptographischen Schlüssels und/oder zur Identifizierung/Authentifizierung des Objekts nutzbar ist.

5. Verfahren nach einem oder mehreren der vorherigen Ansprüche,
**dadurch gekennzeichnet, dass**
das Verfahren zudem eine Anregung des MEMS-Bauteils in einer Anwendung mittels eines Anregungssignales umfassend eine Anwendungsfrequenz umfasst.

6. Verfahren nach einem oder mehreren der vorherigen Ansprüche
**dadurch gekennzeichnet, dass**
eine Berücksichtigung des Messsignals der mindestens einen PUF-Mode zur Erhöhung der Entropie des MEMS-Bauteils als Entropiequelle beiträgt, vorzugsweise um einen Faktor 2, 3, 4, 5 oder mehr im Vergleich zu einer erzeugten Entropie unter ausschließlicher Berücksichtigung der Anwendungsfrequenz ohne Berücksichtigung der mindestens einen PUF-Mode.

7. Verfahren nach einem oder mehreren der vorherigen Ansprüche
**dadurch gekennzeichnet, dass**
zur Erzeugung des kryptographischen Schlüssels und/oder Identifizierung/Authentifizierung des Objekts eine Berücksichtigung des Messsignals der mindestens einen PUF-Mode und der Anwendungsfrequenz erfolgt.

8. Verfahren nach einem oder mehreren der vorherigen Ansprüche
**dadurch gekennzeichnet, dass**
das MEMS-Bauteil eine schwingfähige Struktur umfasst, wobei die Anwendungsfrequenz eine Eigenfrequenz einer Grundmode der schwingfähigen Struktur entspricht und die mindestens eine PUF-Mode einer höherfrequenten Mode der schwingfähigen Struktur entspricht, wobei die schwingfähige Struktur vorzugsweise eine Kammstruktur, Biegebalkenstruktur und/oder Membran umfasst.

9. Verfahren nach einem oder mehreren der vorherigen Ansprüche
**dadurch gekennzeichnet, dass**
das MEMS-Bauteil eine schwingfähige Kammstruktur umfasst, wobei die Anwendungsfrequenz eine Eigenfrequenz einer Grundmode der schwingfähigen Kammstruktur ist und die mindestens eine PUF-Mode eine Fingermode, eine Federmode und/oder eine Überlagerung aus Finger- und Federmode ist.

10. Verfahren nach einem oder mehreren der vorherigen Ansprüche
**dadurch gekennzeichnet, dass**
die Anwendungsfrequenz eine Eigenfrequenz einer in-plane Mode ist und die mindestens eine PUF- Mode eine out-of-plane-Mode ist.

11. Verfahren nach einem oder mehreren der vorherigen Ansprüche
**dadurch gekennzeichnet, dass**
das MEMS-Bauteil ein piezoelektrisches, piezoresistives und/oder kapazitives MEMS-Bauteil ist, wobei das MEMS-Bauteil besonders bevorzugt eine kapazitives MEMS-Bauteil ist,
das MEMS-Bauteil ein MEMS-Aktor und/oder ein MEMS-Sensor umfasst, wobei das MEMS-Bauteil besonders bevorzugt ein Beschleunigungssensor und/oder ein Gyroskop ist und/oder
das MEMS-Bauteil ein MEMS-Filter umfasst, wobei bevorzugt der MEMS-Filter ausgewählt ist aus einer Gruppe umfassend SAW-Filter und BAW-Filter, wobei eine Anwendungsmode vorzugsweise einer Filtermode des MEMS-Filters entspricht.

12. Verfahren nach einem oder mehreren der vorherigen Ansprüche
**dadurch gekennzeichnet, dass**
die Erzeugung des kryptographischen Schlüssels und/oder die Authentifizierung des Objekts ein Quantisierungsverfahren umfasst, wodurch bevorzugt aus analogen Messwerten des Messsignals eine binäre Zeichenfolge abgeleitet wird, welche als kryptographischer Schlüssel dient.

13. Verfahren nach einem oder mehreren der vorherigen Ansprüche
**dadurch gekennzeichnet, dass**
vor der Erzeugung des kryptographischen Schlüssels und/oder der Identifizierung/Authentifizierung des Objekts eine Fehlerkorrektur sowie eine Normalisierung des Messignals aus Verfahrensschritt c) vorgenommen wird, wobei systematische Schwankungen, die nicht zu zufälligen Herstellungsschwankungen beitragen, abgeschwächt oder vollumfänglich eliminiert werden.

14. System zur Erzeugung eines kryptographischen Schlüssels und/oder zur Identifizierung/Authentifizierung von Objekten auf Basis einer physisch unklonierbaren Funktion (PUF) umfassend
a) ein MEMS-Bauteil, wobei das MEMS-Bauteil als PUF dient,
b) eine Recheneinheit, welcher mit dem MEMS- Bauteil verbunden ist, und dazu konfiguriert ist, ein Anregungssignal an das MEMS-Bauteil zu senden und/oder ein Messsignal von dem MEMS-Bauteil zu empfangen,
wobei das Anregungssignal mindestens eine PUF-Mode umfasst, wobei sich die Eigenfrequenz der mindestens einen PUF-Mode von der Anwendungsfrequenz zur Anregung des MEMS-Bauteils in dessen Anwendung unterscheidet und wobei das empfangene Messignal die mindestens eine PUF-Mode umfasst, und wobei die Recheneinheit ferner dazu konfiguriert ist, den kryptographischen Schlüssel zu erzeugen und/oder die Identifizierung/Authentifizierung des Objekts unter Berücksichtigung der mindestens einen PUF-Mode vorzunehmen.

15. Verwendung eines Systems gemäß Anspruch 14 zur Erzeugung eines kryptographischen Schlüssels und/oder zur Identifizierung/Authentifizierung von Objekten, vorzugweise zur Feststellung der Identität eines Objektes, für einen Echtheitsnachweis, zur Überprüfung von Plagiaten, als Authentisierungsmerkmal und/oder als privater Schlüssel.
